# EUROPEAN PATENT APPLICATION

(11) **EP 4 629 735 A1**
(43) Date of publication of application: **08.10.2025**
(21) Application number: 23896498.5
(22) Date of filing: 13.11.2023
(51) Int. Cl.: H04W 74/08

(54) **METHOD AND APPARATUS FOR COMMUNICATION NODE USED FOR WIRELESS COMMUNICATION**

(30) Priority: 28.11.2022 CN 202211534218
(71) Applicant: Apogee Networks, LLC, Dallas, TX 75201 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/131166
(87) International publication number: WO 2024/114346

(57) **Abstract**

The present application discloses a method and apparatus for a communication node used for wireless communication. The method comprises: a communication node sending a preamble in K1 time-frequency resource blocks, K1 being an integer greater than 1; and after one of the K1 time-frequency resource blocks, using at least one candidate RNTI to monitor first signaling, the first signaling being used for scheduling a random access response, wherein each of the K1 time-frequency resource blocks is configured for the preamble; the K1 time-frequency resource blocks are associated with Q1 RS resources, and the Q1 RS resources comprise at least one RS resource; the number of the at least one candidate RNTI used to monitor the first signaling is related to Q1; and Q1 is a positive integer not greater than K1. The solution provided by the present application can improve the random access performance.

## Description

### Technical Field

The present application relates to a transmission method and apparatus in a wireless communication system, in particular to a transmission method and apparatus for random access.

### Background Art

Coverage is one of the key factors considered by an operator at the time of commercializing cellular communication networks, as it directly affects a service quality as well as a capital expenditure (CAPEX) and an operating expenditure (OPEX). In most scenarios of an actual deployment, uplink (UL) performance may be the bottleneck, while in some emerging vertical use cases, uplink traffic is large, for example, video uploading. In the Rel-17 "NR (New Radio) Coverage Enhancement" work item (WI), the NR coverage rates of a PUSCH (Physical Uplink Shared Channel), a PUCCH (Physical Uplink Control Channel) and an Msg3 (Message 3) are extended and enhanced. However, the improvement of PRACH (Physical Random Access Channel) coverage has not yet been addressed. Since a PRACH transmission is very important in many processes, such as initial access and beam failure recovery, Rel-18 has established the "Further NR Coverage Enhancements" work item to further enhance the uplink coverage of the PRACH.

### Summary of the Invention

In NR, at each time of sending one preamble, UE (User Equipment) calculates one RA (Random Access)-RNTI (Radio Network Temporary Identifier) according to a PRACH occasion used for sending this preamble, and monitors a PDCCH (Physical Downlink Control Channel) transmission scrambled by this RA-RNTI for a random access response (RAR) in ra-ResponseWindow. Since the existing protocol does not support a PRACH repetition, monitoring the PDCCH for the random access response according to the existing protocol will reduce the random access performance of the UE. Therefore, for the PRACH repetition, how to monitor the PDCCH transmission for the random access response needs to be enhanced.

In view of the above-mentioned problem, the present application provides a solution for random access. In view of the description of the above-mentioned problem, an NR system is used as one example; the present application is also applicable to scenarios, for example, an LTE system; and further, although the original intention of the present application is directed at a Uu radio, the present application can also be used for a PC5 port. Further, although the original intention of the present application is directed at a terminal and base station scenario, the present application is also applicable to a V2X (Vehicle-to-Everything) scenario and communication scenarios between the terminal and a relay and between the relay and the base station, to achieve similar technical effects in the terminal and base station scenario. Further, although the original intention of the present application is directed at the terminal and base station scenario, the present application is also applicable to an IAB (Integrated Access and Backhaul) communication scenario, to achieve similar technical effects in the terminal and base station scenario. Further, although the original intention of the present application is directed at a terrestrial network scenario, the present application is also applicable to a non-terrestrial network (NTN) communication scenario, to achieve similar technical effects in the TN scenario. In addition, the use of a unified solution for different scenarios also facilitates the reduction of hardware complexity and costs.

As one embodiment, the interpretation of the terminologies in the present application refers to the definition of the 3GPP specification protocol TS36 series.

As one embodiment, the interpretation of the terminologies in the present application refers to the definition of the 3GPP standard protocol TS38 series.

As one embodiment, the interpretation of the terminologies in the present application refers to the definition of the 3GPP standard protocol TS37 series.

As one embodiment, the interpretation of the terminologies in the present application refers to the definition of the standard protocol of the IEEE (Institute of Electrical and Electronics Engineers).

It should be explained that in the absence of conflicts, the embodiments in any node of the present application and the features in the embodiments can be applied to any other node. In the absence of conflicts, the embodiments of the present application and the features in the embodiments can be arbitrarily combined with each other.

The present application discloses a method used in a first node for wireless communication, comprising:
sending a preamble in K1 time-frequency resource blocks, K1 being an integer greater than 1; after one of the K1 time-frequency resource blocks, using at least one candidate RNTI to monitor first signaling, the first signaling being used for scheduling a random access response,
wherein each of the K1 time-frequency resource blocks is configured for the preamble; the K1 time-frequency resource blocks are associated with Q1 RS (Reference Signal) resources, and the Q1 RS resources comprise at least one RS resource; and Q1 is a positive integer not greater than K1.

As one embodiment, the number of the at least one candidate RNTI used to monitor the first signaling is related to Q1.

As one embodiment, the number of the at least one candidate RNTI used to monitor the first signaling is equal to the number of time-frequency resource block groups; and The K1 time-frequency resource blocks consist of at least one time-frequency resource block group, and each time-frequency resource block group of the at least one time-frequency resource block group comprises at least one of the K1 time-frequency resource blocks.

As one embodiment, the problem to be solved by the present application comprises: how to improve random access performance.

As one embodiment, the problem to be solved by the present application comprises: how to monitor the first signaling.

As one embodiment, the problem to be solved by the present application comprises: how to determine an RNTI used to monitor the first signaling.

As one embodiment, the characteristic of the above-mentioned method comprises: at least one candidate RNTI is used to monitor first signaling, and the number of the at least one candidate RNTI used to monitor the first signaling is related to Q1.

As one embodiment, the characteristic of the above-mentioned method comprises: the number of the at least one candidate RNTI used to monitor the first signaling depends on Q1.

As one embodiment, the characteristic of the above-mentioned method comprises: the number of the at least one candidate RNTI used to monitor the first signaling is related to Q1 RS resources.

As one embodiment, the characteristic of the above-mentioned method comprises: the Q1 RS resources are used for determining the number of candidate RNTIs used to monitor the first signaling.

As one embodiment, the benefit of the above-mentioned method comprises: reduction in complexity.

As one embodiment, the benefit of the above-mentioned method comprises: compatibility with existing protocols.

As one embodiment, the benefit of the above-mentioned method comprises: reduction in UE power consumption.

According to one aspect of the present application, it is characterized in that the phrase of the number of the at least one candidate RNTI used to monitor the first signaling being related to Q1 comprises: the number of the at least one candidate RNTI used to monitor the first signaling is equal to 1 and Q1 is equal to 1, or the number of the at least one candidate RNTI used to monitor the first signaling is greater than 1 and Q1 is greater than 1.

According to one aspect of the present application, it is characterized in that the phrase of the number of the at least one candidate RNTI used to monitor the first signaling being related to Q1 comprises: the number of the at least one candidate RNTI used to monitor the first signaling is equal to Q1.

According to one aspect of the present application, it is characterized in that the at least one candidate RNTI used to monitor the first signaling comprises at least a first candidate RNTI and a second candidate RNTI; a first time-frequency resource block group is used for determining the first candidate RNTI, the first time-frequency resource block group comprises at least one of the K1 time-frequency resource blocks, and the first time-frequency resource block group is associated with a first RS resource; a second time-frequency resource block group is used for determining the second candidate RNTI, the second time-frequency resource block group comprises at least one of the K1 time-frequency resource blocks, and the second time-frequency resource block group is associated with a second RS resource; the first RS resource and the second RS resource are respectively one of the Q1 RS resources; and the Q1 is greater than 1.

As one embodiment, the characteristic of the above-mentioned method comprises: a first time-frequency resource block group is used for determining the first candidate RNTI, and a second time-frequency resource block group is used for determining the second candidate RNTI.

As one embodiment, the characteristic of the above-mentioned method comprises: one time-frequency resource block group is used for determining one candidate RNTI.

According to one aspect of the present application, it is characterized by comprising:
starting a first time sub-window along with a preamble sent in one time-frequency resource block in the first time-frequency resource block group; and starting a second time sub-window along with a preamble sent in one time-frequency resource block in the second time-frequency resource block group,
wherein the first time sub-window is used for using the first candidate RNTI to monitor the first signaling; and the second time sub-window is used for using the second candidate RNTI to monitor the first signaling.

As one embodiment, the characteristic of the above-mentioned method comprises: starting one time sub-window along with a preamble sent in one time-frequency resource block in one time-frequency resource block group.

According to one aspect of the present application, it is characterized in that at least the first time sub-window expiring and the second time sub-window expiring are used for triggering a first action set, and the first action set comprises at least considering that receiving of a random access response is unsuccessful.

As one embodiment, the characteristic of the above-mentioned method comprises: each time sub-window expiring is used for triggering the first action set.

As one embodiment, the characteristic of the above-mentioned method comprises: as long as one time sub-window has not expired, the first action set is not triggered.

As one embodiment, the characteristic of the above-mentioned method comprises: as long as one time sub-window is running, the first action set is not triggered.

As one embodiment, the benefit of the above-mentioned method comprises: avoiding prematurely considering that reception of a random access response is unsuccessful.

According to one aspect of the present application, it is characterized by comprising:
starting a first time window along with a preamble sent in one of the K1 time-frequency resource blocks,
wherein the first time window expiring is used for triggering a first action set, and the first action set comprises at least considering that reception of a random access response is unsuccessful.

As one embodiment, the characteristic of the above-mentioned method comprises: during the operation of the first time window, at least one time sub-window is started.

As one embodiment, the characteristic of the above-mentioned method comprises: during the operation of the first time window, any time sub-window is not started.

As one embodiment, the characteristic of the above-mentioned method comprises: the first time window expiring is used for triggering the first action set.

As one embodiment, the characteristic of the above-mentioned method comprises: as long as the first time window is running, the first action set is not triggered.

As one embodiment, the benefit of the above-mentioned method comprises: avoiding prematurely considering that reception of a random access response is unsuccessful.

According to one aspect of the present application, it is characterized by comprising:
receiving a first RRC (Radio Resource Control) message, the first RRC message being used for determining that the K1 time-frequency resource blocks are associated with the Q1 RS resources.

The present application discloses a method for a second node used for wireless communication, comprising:
receiving a preamble sent in K1 time-frequency resource blocks, K1 being an integer greater than 1; and
sending first signaling, the first signaling being used for scheduling a random access response,
wherein after one of the K1 time-frequency resource blocks, the first signaling is monitored by using at least one candidate RNTI; each of the K1 time-frequency resource blocks is configured for the preamble; the K1 time-frequency resource blocks are associated with Q1 RS resources, and the Q1 RS resources comprise at least one RS resource; Q1 is a positive integer not greater than K1.

As one embodiment, the number of the at least one candidate RNTI used to monitor the first signaling is related to Q1.

As one embodiment, the number of the at least one candidate RNTI used to monitor the first signaling is equal to the number of time-frequency resource block groups; and The K1 time-frequency resource blocks consist of at least one time-frequency resource block group, and each time-frequency resource block group of the at least one time-frequency resource block group comprises at least one of the K1 time-frequency resource blocks.

According to one aspect of the present application, it is characterized in that the phrase of the number of the at least one candidate RNTI used to monitor the first signaling being related to Q1 comprises: the number of the at least one candidate RNTI used to monitor the first signaling is equal to 1 and Q1 is equal to 1, or the number of the at least one candidate RNTI used to monitor the first signaling is greater than 1 and Q1 is greater than 1.

According to one aspect of the present application, it is characterized in that the phrase of the number of the at least one candidate RNTI used to monitor the first signaling being related to Q1 comprises: the number of the at least one candidate RNTI used to monitor the first signaling is equal to Q1.

According to one aspect of the present application, it is characterized in that the at least one candidate RNTI used to monitor the first signaling comprises at least a first candidate RNTI and a second candidate RNTI; a first time-frequency resource block group is used for determining the first candidate RNTI, the first time-frequency resource block group comprises at least one of the K1 time-frequency resource blocks, and the first time-frequency resource block group is associated with a first RS resource; a second time-frequency resource block group is used for determining the second candidate RNTI, the second time-frequency resource block group comprises at least one of the K1 time-frequency resource blocks, and the second time-frequency resource block group is associated with a second RS resource; the first RS resource and the second RS resource are respectively one of the Q1 RS resources; and the Q1 is greater than 1.

According to one aspect of the present application, it is characterized in that a first time sub-window is started along with a preamble sent in one time-frequency resource block in the first time-frequency resource block group; a second time sub-window is started along with a preamble sent in one time-frequency resource block in the second time-frequency resource block group; the first time sub-window is used for using the first candidate RNTI to monitor the first signaling; and the second time sub-window is used for using the second candidate RNTI to monitor the first signaling.

According to one aspect of the present application, it is characterized in that at least the first time sub-window expiring and the second time sub-window expiring are used for triggering a first action set, and the first action set comprises at least considering that receiving of a random access response is unsuccessful.

According to one aspect of the present application, it is characterized in that a first time window is started along with a preamble sent in one of the K1 time-frequency resource blocks; and the first time window expiring is used for triggering a first action set, and the first action set comprises at least considering that receiving of a random access response is unsuccessful.

According to one aspect of the present application, it is characterized by comprising:
sending a first RRC message, the first RRC message being used for determining that the K1 time-frequency resource blocks are associated with Q1 RS resources.

The present application discloses a first node for wireless communication, comprising:
a first processor for sending a preamble in K1 time-frequency resource blocks, K1 being an integer greater than 1; and after one of the K1 time-frequency resource blocks, using at least one candidate RNTI to monitor first signaling, the first signaling being used for scheduling a random access response,
wherein each of the K1 time-frequency resource blocks is configured for the preamble; the K1 time-frequency resource blocks are associated with Q1 RS resources, and the Q1 RS resources comprise at least one RS resource; Q1 is a positive integer not greater than K1.

As one embodiment, the number of the at least one candidate RNTI used to monitor the first signaling is related to Q1.

As one embodiment, the number of the at least one candidate RNTI used to monitor the first signaling is equal to the number of time-frequency resource block groups; and The K1 time-frequency resource blocks consist of at least one time-frequency resource block group, and each time-frequency resource block group of the at least one time-frequency resource block group comprises at least one of the K1 time-frequency resource blocks.

The present application discloses a second node for wireless communication, comprising:
a second receiver for receiving a preamble sent in K1 time-frequency resource blocks, K1 being an integer greater than 1; and
a second transmitter for sending first signaling, the first signaling being used for scheduling a random access response,
wherein after one of the K1 time-frequency resource blocks, the first signaling is monitored by using at least one candidate RNTI; each of the K1 time-frequency resource blocks is configured for the preamble; the K1 time-frequency resource blocks are associated with Q1 RS resources, and the Q1 RS resources comprise at least one RS resource; Q1 is a positive integer not greater than K1.

As one embodiment, the number of the at least one candidate RNTI used to monitor the first signaling is related to Q1.

As one embodiment, the number of the at least one candidate RNTI used to monitor the first signaling is equal to the number of time-frequency resource block groups; and The K1 time-frequency resource blocks consist of at least one time-frequency resource block group, and each time-frequency resource block group of the at least one time-frequency resource block group comprises at least one of the K1 time-frequency resource blocks.

As one embodiment, compared with a traditional solution, the present application has the following advantages:
- . reduction in complexity;
- . compatibility with existing protocols;
- . reduction in UE power consumption;
- . avoiding prematurely considering that reception of a random access response is unsuccessful; and
- . improvement of random access performance.

### Brief Description of the Drawings

Other features, purposes, and advantages of the present application will become more apparent by reading the detailed description of the non-limiting embodiments with reference to the following figures:
FIG. 1 shows a flow chart of a transmission of a preamble and first signaling according to one embodiment of the present application;
FIG. 2 shows a schematic diagram of a network architecture according to one embodiment of the present application;
FIG. 3 shows a schematic diagram of an embodiment of radio protocol architectures for a user plane and a control plane according to one embodiment of the present application;
FIG. 4 shows a schematic diagram of a first communication device and a second communication device according to one embodiment of the present application;
FIG. 5 shows a radio signal transmission flow chart according to one embodiment of the present application;
FIG. 6 shows a schematic diagram in which the number of at least one candidate RNTI used to monitor first signaling is related to Q1 according to one embodiment of the present application;
FIG. 7 shows a schematic diagram in which the number of at least one candidate RNTI used to monitor first signaling is related to Q1 according to another embodiment of the present application;
FIG. 8 shows a schematic diagram of the relationship among a candidate RNTI, a time-frequency resource block group and an RS resource according to one embodiment of the present application;
FIG. 9 shows an operation flow chart of a first time sub-window and a second time sub-window according to one embodiment of the present application;
FIG. 10 shows a flow chart in which a first time sub-window expiring and a second time sub-window expiring are used for triggering a first action set according to one embodiment of the present application;
FIG. 11 shows an operation flow chart of a first time window according to one embodiment of the present application;
FIG. 12 shows a structural block diagram of a processing device for a first node according to one embodiment of the present application; and
FIG. 13 shows a structural block diagram of a processing device for a second node according to one embodiment of the present application;
FIG. 14 shows a schematic diagram of a first time sub-window and a second time sub-window according to one embodiment of the present application;
FIG. 15 shows a schematic representation of a first time window according to embodiment of the present application; and
FIG. 16 shows a schematic diagram of a first time window according to another embodiment of the present application.

### Detailed Description of Embodiments

The technical solution of the present application will be further described in detail below in conjunction with the accompanying drawings. It should be explained that in the absence of conflicts, the embodiments in the present application and the features in the embodiments can be arbitrarily combined with each other.

### Embodiment 1

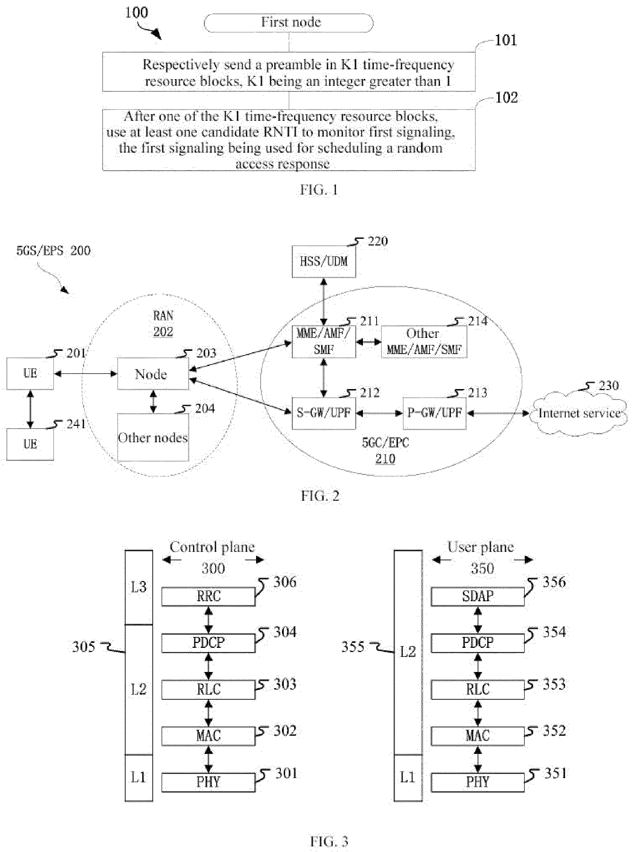

Embodiment 1 illustrates a flow chart of a transmission of a preamble and first signaling according to one embodiment of the present application, as shown in FIG. 1. In FIG. 1, each block represents one step, and it is particularly important to emphasize that the order of the blocks in the figure does not represent a temporal sequence between the steps represented.

In Embodiment 1, in step 101, a first node in the present application sends a preamble in K1 time-frequency resource blocks , and K1 is an integer greater than 1; and in step 102, after one of the K1 time-frequency resource blocks, at least one candidate RNTI is used to monitor first signaling, and the first signaling is used for scheduling a random access response, wherein each of the K1 time-frequency resource blocks is configured for the preamble; the K1 time-frequency resource blocks are associated with Q1 RS resources, and the Q1 RS resources comprise at least one RS resource; the number of the at least one candidate RNTI used to monitor the first signaling is related to Q1; and Q1 is a positive integer not greater than K1.

As one embodiment, the K1 time-frequency resource blocks are used for one PRACH repetition.

As one embodiment, the K1 time-frequency resource blocks are configured for one PRACH repetition.

As one embodiment, the PRACH repetition comprises: an Msg1 (Message 1) repetition.

As one embodiment, the PRACH repetition comprises: an RACH repetition.

As one embodiment, the PRACH repetition comprises: sending a plurality of PRACHs in one random access attempt.

As one embodiment, the PRACH repetition comprises: sending a plurality of PRACHs between two PREAMBLE_TRANSMISSION_COUNTER updates.

As one embodiment, the PRACH repetition comprises: sending a plurality of PRACHs between two PREAMBLE_POWER_RAMPING_COUNTER updates.

As one embodiment, the PRACH repetition comprises: a plurality of consecutive PRACHs.

As one embodiment, the K1 time-frequency resource blocks are K1 PRACH occasions.

As one embodiment, the K1 time-frequency resource blocks correspond to K1 PRACH occasions.

As one embodiment, any two of the K1 time-frequency resource blocks do not overlap in a time domain.

As one embodiment, any two of the K1 time-frequency resource blocks overlap in a time domain.

As one embodiment, at least two of the K1 time-frequency resource blocks overlap in a time domain.

As one embodiment, whether two of the K1 time-frequency resource blocks overlap in a time domain is configurable.

As one embodiment, each of the K1 time-frequency resource blocks is one PRACH occasion.

As one embodiment, the preamble is sent in each of the K1 time-frequency resource blocks.

As one embodiment, the preamble is sent in at least the first one of K1 time-frequency resource blocks.

As one embodiment, the preamble is not sent in at least the last one of K1 time-frequency resource blocks.

As one embodiment, any two preambles sent in the K1 time-frequency resource blocks are the same one preamble.

As one embodiment, the preambles sent in any two of the K1 time-frequency resource blocks are the same.

As one embodiment, there are two of the K1 time-frequency resource blocks, and the preambles sent in the two time-frequency resource blocks are different.

As one embodiment, one time-frequency resource block is configured for one uplink carrier.

As one embodiment, one time-frequency resource block is configured for a UL (Uplink) BWP (Bandwidth Part).

As one embodiment, one time-frequency resource block occupies one PRACH occasion in the time domain.

As one embodiment, one time-frequency resource block occupies a plurality of REs (Resource Element) in the time-frequency domain.

As one embodiment, one time-frequency resource block comprises a time domain resource and a frequency domain resource.

As one embodiment, one time-frequency resource block comprises a time domain resource, a frequency domain resource and a code domain resource.

As one embodiment, one time-frequency resource block comprises a time domain resource, a frequency domain resource, a space domain resource and a code domain resource.

As one embodiment, in a time interval between any two preambles sent in the K1 time-frequency resource blocks, the PREAMBLE_POWER_RAMPING_COUNTER for a first random access process is not increased.

As one embodiment, in a time interval between any two preambles sent in the K1 time-frequency resource blocks, the PREAMBLE_TRANSMISSION_COUNTER for a first random access process is not increased.

As one embodiment, in a time interval between any two preambles sent in the K1 time-frequency resource blocks, a random access resource selection process is not executed.

As one embodiment, in a time interval between any two preambles sent in the K1 time-frequency resource blocks, a random access type is not set.

As one embodiment, a maximum value of K1 is predefined.

As one embodiment, a maximum value of K1 is configurable.

As one embodiment, K1 is equal to 2.

As one embodiment, K1 is equal to 4.

As one embodiment, K1 is equal to 8.

As one embodiment, the K1 time-frequency resource blocks are used for sending at most K1 preambles.

As one embodiment, the K1 time-frequency resource blocks are used for determining a transmission occasion of at most K1 preambles.

As one embodiment, the K1 time-frequency resource blocks are used for sending K1 preambles.

As one embodiment, the K1 time-frequency resource blocks are used for determining a transmission occasion of K1 preambles.

As one embodiment, each of the K1 time-frequency resource blocks is reserved for the preamble.

As one embodiment, each of the K1 time-frequency resource blocks is used for sending the preamble.

As one embodiment, each of the K1 time-frequency resource blocks can be used for sending the preamble.

As one embodiment, each of the K1 time-frequency resource blocks is configured for a transmission of the preamble.

As one embodiment, each of the K1 time-frequency resource blocks is configured for at least one preamble.

As one embodiment, each of the K1 time-frequency resource blocks is reserved for one transmission of one preamble.

As one embodiment, each of the K1 time-frequency resource blocks comprises a time domain resource used for one preamble.

As one embodiment, each of the K1 time-frequency resource blocks comprises a frequency domain resource used for one preamble.

As one embodiment, each of the K1 time-frequency resource blocks comprises a spatial domain resource used for one preamble.

As one embodiment, each of the K1 time-frequency resource blocks comprises one preamble.

As one embodiment, each of the K1 time-frequency resource blocks is used for the same one preamble.

As one embodiment, each of the K1 time-frequency resource blocks is used for at least two different preambles.

As one embodiment, the preamble sent in the K1 time-frequency resource blocks is configured for four-step random access.

As one embodiment, the preamble sent in the K1 time-frequency resource blocks is configured for two-step random access.

As one embodiment, any two preambles sent in the K1 time-frequency resource blocks are generated according to the same one sequence.

As one embodiment, root sequences of any two preambles sent in the K1 time-frequency resource blocks are the same.

As one embodiment, indexes of any two preambles sent in the K1 time-frequency resource blocks are the same.

As one embodiment, there are two of the K1 time-frequency resource blocks, and the preambles sent in the two time-frequency resource blocks are generated according to different sequences.

As one embodiment, there are two of the K1 time-frequency resource blocks, and the root sequences of the preambles sent in the two time-frequency resource blocks are different.

As one embodiment, there are two of the K1 time-frequency resource blocks, and the indexes of the preambles sent in the two time-frequency resource blocks are different.

As one embodiment, any two of the K1 time-frequency resource blocks are configured for the same one serving cell.

As one embodiment, any two of the K1 time-frequency resource blocks are configured for a cell identified by the same one PCI (Physical Cell Identifier).

As one embodiment, there are two of the K1 time-frequency resource blocks that are configured for different serving cells.

As one embodiment, there are two of the K1 time-frequency resource blocks that are configured for cells identified by different PCIs.

As one embodiment, any of the K1 time-frequency resource blocks is configured for the same one UL BWP.

As one embodiment, any of the K1 time-frequency resource blocks is configured for the same one uplink carrier.

As one embodiment, the phrase of after one of the K1 time-frequency resource blocks comprises: after a given time-frequency resource block of the K1 time-frequency resource blocks.

As one sub-embodiment of this embodiment, the given time-frequency resource block is one reference time-frequency resource block among the K1 time-frequency resource blocks.

As one sub-embodiment of this embodiment, the given time-frequency resource block is any reference time-frequency resource block among the K1 time-frequency resource blocks.

As one sub-embodiment of this embodiment, the given time-frequency resource block is any of the K1 time-frequency resource blocks.

As one sub-embodiment of this embodiment, the given time-frequency resource block is the earliest one of the K1 time-frequency resource blocks in the time domain.

As one sub-embodiment of this embodiment, the given time-frequency resource block is the latest one of the K1 time-frequency resource blocks in the time domain.

As one embodiment, the phrase of after one of the K1 time-frequency resource blocks comprises: after sending the preamble in the one of the K1 time-frequency resource blocks.

As one embodiment, the phrase of after one of the K1 time-frequency resource blocks comprises: a first PDCCH occasion after sending the preamble in the one of the K1 time-frequency resource blocks.

As one embodiment, the phrase of after one of the K1 time-frequency resource blocks comprises: after a time domain cut-off moment of the one of the K1 time-frequency resource blocks.

As one embodiment, the phrase of after one of the K1 time-frequency resource blocks comprises: after a time domain cut-off moment.

As one embodiment, within a time interval after the one of the K1 time-frequency resource blocks, at least one candidate RNTI is used to monitor the first signaling.

As one embodiment, the behavior of "using at least one candidate RNTI to monitor first signaling" comprises: monitoring the first signaling according to the at least one candidate RNTI.

As one embodiment, the behavior of "using at least one candidate RNTI to monitor first signaling" comprises: monitoring the first signaling for the at least one candidate RNTI.

As one embodiment, the behavior of "using at least one candidate RNTI to monitor first signaling" comprises: monitoring the first signaling, the first signaling being scrambled by any of the at least one candidate RNTI.

As one embodiment, the behavior of "using at least one candidate RNTI to monitor first signaling" comprises: monitoring the first signaling, the first signaling being scrambled by any of the at least one candidate RNTI.

As one embodiment, the candidate RNTI used to monitor the first signaling does not comprise a C-RNTI (Cell Radio Network Temporary Identifier).

As one embodiment, after one of the K1 time-frequency resource blocks, second signaling is monitored, the second signaling is used for scheduling an uplink grant for a new transmission, and the second signaling is scrambled by the C-RNTI; and the preamble sent in the K1 time-frequency resource blocks is configured for two-step random access.

As one embodiment, after one of the K1 time-frequency resource blocks, second signaling is monitored, the second signaling is used for scheduling an absolute timing advance command MAC CE (Control Element), and the second signaling is scrambled by the C-RNTI; and the preamble sent in the K1 time-frequency resource blocks is configured for two-step random access.

As one embodiment, after one of the K1 time-frequency resource blocks, second signaling is not required to be monitored, the second signaling is used for scheduling a link grant for a new transmission, and the second signaling is scrambled by the C-RNTI; and the preamble sent in the K1 time-frequency resource blocks is configured for four-step random access.

As one embodiment, after one of the K1 time-frequency resource blocks, second signaling is not required to be monitored, the second signaling is used for scheduling an absolute timing advance command MAC CE, and the second signaling is scrambled by the C-RNTI; and the preamble sent in the K1 time-frequency resource blocks is configured for four-step random access.

As one embodiment, any candidate RNTI used to monitor the first signaling is one RA-RNTI; the preamble sent in the K1 time-frequency resource blocks is configured for four-step random access.

As one embodiment, any candidate RNTI used to monitor the first signaling is one MSGB-RNTI; the preamble sent in the K1 time-frequency resource blocks is configured for two-step random access.

As one embodiment, the monitoring refers to monitor.

As one embodiment, the monitoring comprises detection.

As one embodiment, the monitoring comprises supervising.

As one embodiment, the monitoring comprises searching.

As one embodiment, the phase of "monitoring first signaling" comprises: determining whether the first signaling exists by a CRC (Cyclic Redundancy Check).

As one embodiment, the phase of "monitoring first signaling" comprises: searching for the first signaling on the PDCCH.

As one embodiment, the first signaling is transmitted by the PDCCH.

As one embodiment, the first signaling is physical layer signaling.

As one embodiment, the first signaling is one DCI.

As one embodiment, the first signaling is one DCI scrambled by one candidate RNTI.

As one embodiment, the first signaling is addressed to the one candidate RNTI.

As one embodiment, the first signaling is identified by one candidate RNTI.

As one embodiment, the CRC of the first signaling is scrambled by one candidate RNTI.

As one embodiment, the first signaling is one DCI scrambled by any of the at least one candidate RNTI.

As one embodiment, the first signaling is addressed to any of the at least one candidate RNTI.

As one embodiment, the first signaling is identified by any of the at least one candidate RNTI.

As one embodiment, the CRC of the first signaling is scrambled by any of the at least one candidate RNTI.

As one embodiment, any of the at least one candidate RNTI is one RA-RNTI.

As one embodiment, any of the at least one candidate RNTI is used for monitoring of the random access response.

As one embodiment, any of the at least one candidate RNTI is one non-negative integer.

As one embodiment, any of the at least one candidate RNTI is one positive integer.

As one embodiment, a format of the first signaling is DCI format 1_0.

As one embodiment, a format of the first signaling is DCI format 1_1.

As one embodiment, a format of the first signaling is DCI format 1_2.

As one embodiment, the random access response is one MAC layer signaling.

As one embodiment, the first signaling indicates a PDSCH (Physical Downlink Shared Channel) resource occupied by the random access response.

As one embodiment, the first signaling is used for indicating scheduling information of the PDSCH, and the PDSCH is used for carrying at least the random access response.

As one embodiment, the random access response scheduled by the first signaling is one RAR; and the preamble sent in the K1 time-frequency resource blocks is configured for four-step random access.

As one embodiment, the random access response scheduled by the first signaling is one fallbackRAR; and the preamble sent in the K1 time-frequency resource blocks is configured for two-step random access.

As one embodiment, the random access response scheduled by the first signaling is one successkRAR; and the preamble sent in the K1 time-frequency resource blocks is configured for two-step random access.

As one embodiment, the random access response scheduled by the first signaling comprises one RAPID (Random Access Preamble IDentifier).

As one embodiment, the random access response scheduled by the first signaling comprises one BI (Backoff Indicator).

As one embodiment, the random access response scheduled by the first signaling comprises one MAC subPDU.

As one embodiment, the random access response scheduled by the first signaling comprises one MAC subPDU, and the one MAC subPDU consists of one MAC CE and one MAC subheader.

As one embodiment, the random access response scheduled by the first signaling comprises one MAC subPDU, and the one MAC subPDU consists of only one MAC subheader.

As one embodiment, the random access response scheduled by the first signaling is one RAR.

As one embodiment, the sentence that "the K1 time-frequency resource blocks are associated with Q1 RS resources" comprises: any of the Q1 RS resources is configured for one of the K1 time-frequency resource blocks.

As one embodiment, the sentence that "the K1 time-frequency resource blocks are associated with Q1 RS resources" comprises: any of the Q1 RS resources is configured for one or more of the K1 time-frequency resource blocks.

As one embodiment, the sentence that "the K1 time-frequency resource blocks are associated with Q1 RS resources" comprises: any of the K1 time-frequency resource blocks is associated with one of the Q1 RS resources.

As one embodiment, the sentence that "the K1 time-frequency resource blocks are associated with Q1 RS resources" comprises: any of the K1 time-frequency resource blocks is configured for one of the Q1 RS resources.

As one embodiment, the sentence that "the K1 time-frequency resource blocks are associated with Q1 RS resources" comprises: any of the K1 time-frequency resource blocks is configured for one of the Q1 RS resources, and any of the Q1 RS resources is configured with one of the K1 time-frequency resource blocks.

As one embodiment, an RRC message is used for determining that the K1 time-frequency resource blocks are associated with Q1 RS resources.

As one embodiment, a first RRC message is used for determining that the K1 time-frequency resource blocks are associated with Q1 RS resources.

As one embodiment, any two of the Q1 RS resource blocks are not the same; and the Q1 is greater than 1.

As one embodiment, the Q1 RS resources are respectively associated with Q1 TRPs.

As one embodiment, there are two of the Q1 RS resources, and the two RS resources are respectively associated with two TRPs.

As one embodiment, the Q1 RS resources are respectively associated with Q1 cells, and at least one of the Q1 cells is a serving cell of the first node.

As one sub-embodiment of this embodiment, the PCIs of any two of the Q1 cells are different.

As one sub-embodiment of this embodiment, at least one of the Q1 cells is configured with ServCellIndex, and the PCIs of the other of the Q1 cells are indicated by the RRC field with additionalPCI included in the name.

As one embodiment, there are two of the Q1 RS resources, and the two RS resources are respectively associated with two cells, and one of the two cells is the serving cell of the first node.

As one sub-embodiment of this embodiment, the PCIs of the two cells are different.

As one sub-embodiment of this embodiment, the other of the two cells is configured for the one cell.

As one embodiment, any of the Q1 RS resources is a downlink RS resource.

As one embodiment, any of the Q1 RS resources is an uplink RS resource.

As one embodiment, any of the Q1 RS resources is a sidelink RS resource.

As one embodiment, the number of RS resources included in the Q1 RS resources is configurable.

As one embodiment, the number of RS resources included in the Q1 RS resources is preconfigured.

As one embodiment, any RS resource included in the Q1 RS resources is one CSI (Channel State Information)-RS (Reference Signal) resource.

As one embodiment, any RS resource included in the Q1 RS resources is one SSB (Synchronization Signal Block) resource.

As one embodiment, any RS resource included in the Q1 RS resources is one CSI-RS resource or one SSB resource.

As one embodiment, the Q1 RS resources are used for determining the Q1 reference time-frequency resource blocks.

As one embodiment, the Q1 RS resources are used for determining the Q1 reference time-frequency resource blocks among the K1 time-frequency resource blocks.

As one embodiment, the Q1 RS resources are used for determining the Q1 time-frequency resource block groups among the K1 time-frequency resource blocks, and each of the Q1 time-frequency resource block groups comprises one reference time-frequency resource block.

As one embodiment, the sentence that "the number of the at least one candidate RNTI used to monitor the first signaling is related to Q1" comprises: the at least one candidate RNTI used to monitor the first signaling is related to Q1 RS resources.

As one embodiment, the sentence that "the number of the at least one candidate RNTI used to monitor the first signaling is related to Q1" comprises: the number of the at least one candidate RNTI used to monitor the first signaling is related to Q1.

As one embodiment, the "the number of at least one candidate RNTI used to monitor the first signaling is related to Q1" comprises: the Q1 is used for determining the number of the at least one candidate RNTI used to monitor the first signaling.

As one embodiment, the sentence that "the number of the at least one candidate RNTI used to monitor the first signaling is related to Q1" comprises: the number of the at least one candidate RNTI used to monitor the first signaling depends on at least Q1.

As one embodiment, the sentence that "the number of the at least one candidate RNTI used to monitor the first signaling is related to Q1" comprises: the number of the at least one candidate RNTI used to monitor the first signaling depends on at least Q1.

As one embodiment, the sentence that "the number of the at least one candidate RNTI used to monitor the first signaling is related to Q1" comprises: the number of the at least one candidate RNTI used to monitor the first signaling is related to Q1.

As one embodiment, the sentence that "the number of the at least one candidate RNTI used to monitor the first signaling is related to Q1" comprises: the number of the at least one candidate RNTI used to monitor the first signaling is equal to Q1.

As one embodiment, the sentence that "the number of the at least one candidate RNTI used to monitor the first signaling is related to Q1" comprises: the number of the at least one candidate RNTI used to monitor the first signaling is not greater than Q1.

As one embodiment, the sentence that "the number of the at least one candidate RNTI used to monitor the first signaling is related to Q1" comprises: the number of the at least one candidate RNTI used to monitor the first signaling is equal to 1 and Q1 is equal to 1, or the number of the at least one candidate RNTI used to monitor the first signaling is greater than 1 and Q1 is greater than 1.

As one embodiment, the sentence that "the number of the at least one candidate RNTI used to monitor the first signaling is related to Q1" comprises: the number of the at least one candidate RNTI used to monitor the first signaling is equal to 1 and Q1 is equal to 1, or the number of the at least one candidate RNTI used to monitor the first signaling is not less than 1 and Q1 is greater than 1.

As one sub-embodiment of this embodiment, as long as Q1 is greater than 1, the number of the at least one candidate RNTI used to monitor the first signaling is not less than 1.

As one sub-embodiment of this embodiment, if Q1 is greater than 1, the number of the at least one candidate RNTI used to monitor the first signaling is not less than 1.

As one sub-embodiment of this embodiment, Q1 greater than 1 is used for determining that the number of the at least one candidate RNTI used to monitor the first signaling is not less than 1.

As one sub-embodiment of this embodiment, if Q1 is greater than 1, at least one candidate RNTI is used to monitor the first signaling.

As one embodiment, the "the number of at least one candidate RNTI used to monitor the first signaling is related to Q1" comprises: the Q1 is used for determining the number of the at least one candidate RNTI used to monitor the first signaling.

As one embodiment, any of the at least one candidate RNTI used to monitor the first signaling is determined according to at least one of the K1 time-frequency resource blocks.

As one embodiment, any of the at least one candidate RNTI used to monitor the first signaling is determined according to one of the K1 time-frequency resource blocks.

As one embodiment, any of the at least one candidate RNTI used to monitor the first signaling is determined according to more of the K1 time-frequency resource blocks.

As one embodiment, any of the at least one candidate RNTI used to monitor the first signaling is determined according to one or more of the K1 time-frequency resource blocks.

As one embodiment, a maximum value of the Q1 is K1.

As one embodiment, a maximum value of the Q1 is less than K1.

As one embodiment, the Q1 is the number of RS resources associated with the K1 time-frequency resource blocks.

As one embodiment, the Q1 is used for determining the number of RS resources of the K1 time-frequency resource blocks.

As one embodiment, the first signaling scrambled by any candidate RNTI in the first candidate RNTI set is monitored in a first search space.

As one sub-embodiment of this embodiment, the first search space is a search space.

As one sub-embodiment of this embodiment, the first search space is configured by ra-SearchSpace.

As one sub-embodiment of this embodiment, the name of an RRC field used for configuring the first search space comprises ra-SearchSpace.

As one embodiment, the first signaling scrambled by the first candidate RNTI is monitored in a first sub-search space; the first signaling scrambled by the second candidate RNTI is monitored in a second sub-search space; and the first sub-search space and the second sub-search space are two different search spaces.

As one sub-embodiment of this embodiment, the first sub-search space and the second sub-search space are orthogonal.

As one sub-embodiment of this embodiment, the first sub-search space and the second sub-search space are respectively one subset of the ra-SearchSpace.

As one sub-embodiment of this embodiment, the name of the RRC field used for configuring the first search space comprises the ra-SearchSpace, and the name of the RRC field used for configuring the second search space comprises the ra-SearchSpace.

### Embodiment 2

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terms. The 5GS/EPS 200 comprises at least one of UE (User Equipment) 201, a RAN (Radio Access Network) 202, a 5GC (5G Core Network)/EPC (Evolved Packet Core) 210, an HSS (Home Subscriber Server)/UDM (Unified Data Management) 220, and an Internet service 230. 5GS/EPS can be interconnected with other access networks, but for simplicity, these entities/interfaces are not shown. As shown, the 5GS/EPS provides packet-switched services, but those skilled in the art will readily appreciate that various concepts presented throughout the present application may be extended to a network providing a circuit-switched service or other cellular networks. RAN comprises a source node 203 and other nodes 204. The node 203 provides user and control plane protocol termination towards UE201. The node 203 can be connected to other nodes 204 via an Xn interface (e.g., backhaul)/X2 interface. The node 203 may also be referred to as a base station, a base transceiving station, a radio base station, a radio transceiver, a transceiver function, a basic service set (BSS), an extended service set (ESS), a TRP (Transmitter Receiver Point), or some other suitable terms. The node 203 provides an access point to 5GC/EPC210 for UE201. Examples of UE201 comprises a cellular phone, a smart phone, a session initiation protocol (SIP) phone, a laptop, a personal digital assistant (PDA), a satellite radio, a non-terrestrial base station communication, a satellite mobile communication, a global positioning system, a multimedia device, a video device, a digital audio player (for example, an MP3 player), a camera, a game console, a drone, an aircraft, a narrowband Internet of Things device, a machine type communication device, a land vehicle, an automobile, a wearable device, or any other similarly functional device. Those skilled in the art may also call the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms. The node 203 is connected to 5GC/EPC210 by an S1/NG interface. 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between UE201 and 5GC/EPC210. Generally, the MME/AMF/SMF211 provides bearer and connection management. All user IP (Internet Protocol) packets are communicated by the S-GW/UPF212, and the S-GW/UPF212 is connected to the P-GW/UPF213. The P-GW provides UE IP address allocation and other functions. The P-GW/UPF213 is connected to the Internet service 230. The Internet service 230 comprises an Internet protocol service corresponding to an operator, and may specifically comprise the Internet, an intranet, an IMS (IP Multimedia Subsystem) and a packet switching streaming service.

As one embodiment, the UE201 corresponds to the first node in the present application.

As one embodiment, the UE201 is one piece of user equipment (UE).

As one embodiment, the UE201 is one base station device (BaseStation, BS).

As one embodiment, the UE201 is one relay device.

As one embodiment, the node 203 corresponds to the second node in the present application.

As one embodiment, the node 203 is one base station device.

As one embodiment, the node 203 is one piece of user equipment.

As one embodiment, the node 203 is one relay device.

As one embodiment, the node 203 is a gateway.

Typically, the UE201 is one piece of user equipment, and the node 203 is one base station device.

As one embodiment, the user equipment supports a transmission in a terrestrial network.

As one embodiment, the user equipment supports a transmission in a non-terrestrial network (NTN).

As one embodiment, the user equipment supports a transmission in a large delay difference network.

As one embodiment, the user equipment supports a dual connection (DC) transmission.

As one embodiment, the user equipment comprises an aircraft.

As one embodiment, the user equipment comprises a vehicle terminal.

As one embodiment, the user equipment comprises a ship.

As one embodiment, the user equipment comprises an Internet of Things terminal.

As one embodiment, the user equipment comprises an industrial Internet of Things terminal.

As one embodiment, the user equipment comprises a device that supports a low-delay and high-reliability transmission.

As one embodiment, the user equipment comprises a test device.

As one embodiment, the user equipment comprises a signaling tester.

As one embodiment, the base station device comprises a base transceiver station (BTS).

As one embodiment, the base station device comprises a node B (NodeB, NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device supports the transmission in the non-terrestrial network.

As one embodiment, the base station device supports the transmission in the large delay difference network.

As one embodiment, the base station device supports the transmission in the terrestrial network.

As one embodiment, the base station device comprises a macro cellular base station.

As one embodiment, the base station device comprises a micro cell base station.

As one embodiment, the base station device comprises a pico cell base station.

As one embodiment, the base station device comprises a femtocell.

As one embodiment, the base station device comprises a base station device that supports a large delay difference.

As one embodiment, the base station device comprises a flight platform device.

As one embodiment, the base station device comprises a satellite device.

As one embodiment, the base station device comprises a TRP (Transmitter Receiver Point).

As one embodiment, the base station device comprises a CU (Centralized Unit).

As one embodiment, the base station device comprises a DU (Distributed Unit).

As one embodiment, the base station device comprises a test device.

As one embodiment, the base station device comprises a signaling tester.

As one embodiment, the base station device comprises an IAB (Integrated Access and Backhaul)-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay device comprises a relay.

As one embodiment, the relay device comprises an L3 relay.

As one embodiment, the relay device comprises an L2 relay.

As one embodiment, the relay device comprises a router.

As one embodiment, the relay device comprises a switch.

As one embodiment, the relay device comprises user equipment.

As one embodiment, the relay device comprises a base station device.

### Embodiment 3

Embodiment 3 shows a schematic diagram of an embodiment of radio protocol architectures for one user plane and one control plane according to the present application, as shown in FIG. 3. FIG. 3 is a schematic diagram illustrating an embodiment of a radio protocol architecture for a user plane 350 and a control plane 300, and FIG. 3 shows the radio protocol architecture for the control plane 300 by using three layers: layer 1, layer 2, and layer 3. The layer 1 (L1 layer) is the lowest layer and implements various PHY (physical layer) signal processing functions. The L1 layer will be herein referred to as PHY301. The layer 2 (L2 layer) 305 is on the PHY301 and comprises a MAC (Medium Access Control) sub-layer 302, an RLC (Radio Link Control) sub-layer 303, and a PDCP (Packet Data Convergence Protocol) sub-layer 304. The PDCP sub-layer 304 provides multiplexing between different radio bearer and logical channels. The PDCP sub-layer 304 also provides security by encrypting data packets and provides zone-crossing mobility support. The RLC sub-layer 303 provides segmentation and reassembly of upper-layer packets, retransmission of lost data packets, and reordering of data packets to compensate for unordered reception caused by a HARQ (Hybrid Automatic Repeat Request). The MAC sub-layer 302 provides multiplexing between logical and transmission channels. The MAC sub-layer 302 is also responsible for allocating various radio resources (e.g., resource blocks) in one cell. The MAC sub-layer 302 is also responsible for HARQ operations. The RRC (Radio Resource Control) sub-layer 306 in the layer 3 (L3 layer) in the control plane 300 is responsible for obtaining radio resources (i.e., radio bearers) and configuring lower layers by using RRC signaling. The radio protocol architecture for the user plane 350 comprises a layer 1 (L1 layer) and a layer 2 (L2 layer). The radio protocol architecture in the user plane 350 for the physical layer 351, the PDCP sub-layer 354 in the L2 layer 355, the RLC sub-layer 353 in the L2 layer 355, and the MAC sub-layer 352 in the L2 layer 355 is substantially the same as that in the control plane 300 for the corresponding layers and sub-layers, but the PDCP sub-layer 354 also provides header compression for upper-layer data packets to reduce radio transmission overhead. The L2 layer 355 in the user plane 350 further comprises an SDAP (Service Data Adaptation Protocol) sub-layer 356, and the SDAP sub-layer 356 is responsible for mapping between a QoS stream and a data radio bearer (DRB) to support the diversity of services.

As one embodiment, the radio protocol architecture in FIG. 3 is applicable to the first node in the present application.

As one embodiment, the radio protocol architecture in FIG. 3 is applicable to the second node in the present application.

As one embodiment, each preamble in the present application is generated in the PHY301 or the PHY351.

As one embodiment, the first signaling in the present application is generated in the PHY301 or the PHY351.

As one embodiment, a random access response in the present application is generated in RRC306.

As one embodiment, the random access response in the present application is generated in MAC302 or MAC352.

As one embodiment, the random access response in the present application is generated in PHY301 or PHY351.

As one embodiment, a first RRC message in the present application is generated in the RRC306.

As one embodiment, the first RRC message in the present application is generated in the MAC302 or the MAC352.

As one embodiment, the first RRC message in the present application is generated in the PHY301 or the PHY351.

### Embodiment 4

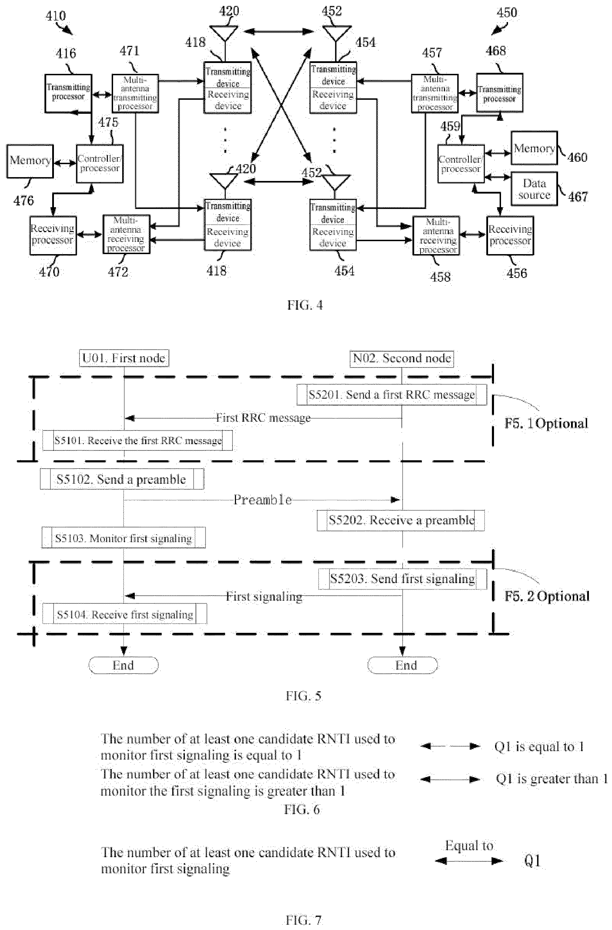

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In the transmission from the second communication device 410 to the first communication device 450, at the second communication device 410, an upper-layer data packet from a core network is provided to the controller/processor 475. The controller/processor 475 implements the functionality of the L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of a lost packet, and for signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410, as well as mapping of signal constellations based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding (comprising codebook-based precoding and non-codebook-based precoding) and beamforming processing on the coded and modulated symbols to generate one or more spatial streams. The transmitting processor 416 then maps each spatial stream to a subcarrier, multiplexes with a reference signal (for example, a pilot frequency) in a time domain and/or frequency domain, and subsequently uses an inverse fast Fourier transform (IFFT) to generate a physical channel carrying a time-domain multi-carrier symbol stream. Subsequently, the multi-antenna transmitting processor 471 performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, which is subsequently provided to a different antenna 420.

In the transmission from the second communication device 410 to the first communication device 450, at the first communication device 450, each receiving device 454 receives a signal by a corresponding antenna 452 thereof. Each receiving device 454 recovers the information modulated onto the RF carrier and converts the RF stream into the baseband multi-carrier symbol stream to be provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, a physical layer data signal and the reference signal are demultiplexed by the receiving processor 456, wherein the reference signal will be used for channel estimation, and the data signal is subjected to multi-antenna detection in the multi-antenna receiving processor 458 to recover any spatial stream with the first communication device 450 as the destination. The symbols on each spatial stream are demodulated and recovered in the receiving processor 456, and a soft decision is generated. Subsequently, the receiving processor 456 decodes and deinterleaves the soft decision to recover the upper-layer data and a control signal transmitted by the second communication device 410 on the physical channel. Subsequently, the upper-layer data and the control signal are provided to the controller/processor 459. The controller/processor 459 implements the functions of the L2 layer. The controller/processor 459 may be associated with a memory 460 storing program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover the upper-layer data packet from the core network. Subsequently, the upper-layer data packet is provided to all protocol layers above the L2 layer. Various control signals may also be provided to an L3 for L3 processing.

In the transmission from the first communication device 450 to the second communication device 410, at the first communication device 450, a data source 467 is used for providing the upper-layer data packet to the controller/processor 459. The data source 467 represents all protocol layers above the L2 layer. Similar to the sending function at the second communication device 410 described in the transmission from the second communication device 410 to the first communication device 450, the controller/processor 459 implements header compression, encryption, packet segmentation and reordering, and multiplexing between logical and transport channels based on wireless resource allocation, and implements L2 layer functions for the user plane and the control plane. The controller/processor 459 is also responsible for the retransmission of the lost packet, and for signaling to the second communication device 410. The transmitting processor 468 performs modulation mapping and channel coding processing, and the multi-antenna transmitting processor 457 performs digital multi-antenna spatial precoding (comprising codebook-based precoding and non-codebook-based precoding) and beamforming processing. Subsequently, the transmitting processor 468 modulates the generated spatial stream into a multi-carrier/single-carrier symbol stream, which is provided to a different antenna 452 via the transmitting device 454 after an analog precoding/beamforming operation in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal by a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the L2 layer functions. The controller/processor 475 may be associated with a memory 476 storing program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover the upper-layer data packet from the UE450. The upper-layer data packet from the controller/processor 475 can be provided to the core network.

As one embodiment, the first communication device 450 comprises: at least one processor and at least one memory, wherein the at least one memory comprises a computer program code; and the at least one memory and the computer program code are configured to be used with the at least one processor, the first communication device 450 at least: sends a preamble in K1 time-frequency resource blocks, K1 being an integer greater than 1; after one of the K1 time-frequency resource blocks, using at least one candidate RNTI to monitor first signaling, the first signaling being used for scheduling a random access response, wherein each of the K1 time-frequency resource blocks is configured for the preamble; the K1 time-frequency resource blocks are associated with Q1 RS resources, and the Q1 RS resources comprise at least one RS resource; the number of the at least one candidate RNTI used to monitor the first signaling is related to Q1; and Q1 is a positive integer not greater than K1.

As one embodiment, the first communication device 450 comprises: a memory storing a computer-readable instruction program, wherein the computer-readable instruction program generates actions when executed by at least one processor, and the actions comprise: sending a preamble in K1 time-frequency resource blocks, K1 being an integer greater than 1; and after one of the K1 time-frequency resource blocks, using at least one candidate RNTI to monitor first signaling, the first signaling being used for scheduling a random access response, wherein each of the K1 time-frequency resource blocks is configured for the preamble; the K1 time-frequency resource blocks are associated with Q1 RS resources, and the Q1 RS resources comprise at least one RS resource; the number of the at least one candidate RNTI used to monitor the first signaling is related to Q1; and Q1 is a positive integer not greater than K1.

As one embodiment, the second communication device 410 comprises: at least one processor and at least one memory, wherein the at least one memory comprises a computer program code; and the at least one memory and the computer program code are configured to be used with the at least one processor. The second communication device 410 at least: receives a preamble sent in K1 time-frequency resource blocks, K1 being an integer greater than 1; and sending first signaling, the first signaling being used for scheduling a random access response, wherein after one of the K1 time-frequency resource blocks, the first signaling is monitored by using at least one candidate RNTI; each of the K1 time-frequency resource blocks is configured for the preamble; the K1 time-frequency resource blocks are associated with Q1 RS resources, and the Q1 RS resources comprise at least one RS resource; the number of the at least one candidate RNTI used to monitor the first signaling is related to Q1; and Q1 is a positive integer not greater than K1.

As one embodiment, the second communication device 410 comprises: a memory storing a computer-readable instruction program, wherein the computer-readable instruction program generates actions when executed by at least one processor, and the actions comprise: receiving a preamble sent in K1 time-frequency resource blocks, K1 being an integer greater than 1; and sending first signaling, the first signaling being used for scheduling a random access response, wherein after one of the K1 time-frequency resource blocks, the first signaling is monitored by using at least one candidate RNTI; each of the K1 time-frequency resource blocks is configured for the preamble; the K1 time-frequency resource blocks are associated with Q1 RS resources, and the Q1 RS resources comprise at least one RS resource; the number of the at least one candidate RNTI used to monitor the first signaling is related to Q1; and Q1 is a positive integer not greater than K1.

As one embodiment, at least one of the antenna 452, the receiving device 454, the receiving processor 456, and the controller/processor 459 is used to monitor the first signaling.

As one embodiment, at least one of the antenna 452, the receiving device 454, the receiving processor 456, and the controller/processor 459 is used for receiving the first signaling.

As one embodiment, at least one of the antenna 420, the transmitting device 418, the transmitting processor 416, and the controller/processor 475 is used for sending the first signaling.

As one embodiment, at least one of the antenna 452, the transmitting device 454, the transmitting processor 468, and the controller/processor 459 is used for sending a preamble in K1 time-frequency resource blocks.

As one embodiment, at least one of the antenna 420, the receiving device 418, the receiving processor 470, and the controller/processor 475 is used for receiving a preamble sent in K1 time-frequency resource blocks.

As one embodiment, the first communication device 450 corresponds to the first node in the present application.

As one embodiment, the second communication device 410 corresponds to the second node in the present application.

As one embodiment, the first communication device 450 is one piece of user equipment.

As one embodiment, the first communication device 450 is one base station device.

As one embodiment, the first communication device 450 is one relay device.

As one embodiment, the second communication device 410 is one piece of user equipment.

As one embodiment, the second communication device 410 is one base station device.

As one embodiment, the second communication device 410 is one relay device.

### Embodiment 5

Embodiment 5 illustrates a radio signal transmission flow chart according to one embodiment of the present application, as shown in FIG. 5. It is particularly explained that the order in the present example does not limit the signal transmission order and the implementation order in the present application.

For **a first node U01**, in step S5101, a first RRC message is received, and the first RRC message is used for determining that K1 time-frequency resource blocks are associated with Q1 RS resources; in step S5102, a preamble is sent in K1 time-frequency resource blocks, and K1 is an integer greater than 1; in step S5103, after one of the K1 time-frequency resource blocks, at least one candidate RNTI is used to monitor first signaling, and the first signaling is used for scheduling a random access response; and in step S5104, the first signaling is received.

For **a second node N02**, in step S5201, the first RRC message is sent; in step S5202, the preamble sent in the K1 time-frequency resource blocks is received; and in step S5203, the first signaling is sent.

In Embodiment 5, each of the K1 time-frequency resource blocks is configured for the preamble; the K1 time-frequency resource blocks are associated with Q1 RS resources, and the Q1 RS resources comprise at least one RS resource; the number of the at least one candidate RNTI used to monitor the first signaling is related to Q1; and Q1 is a positive integer not greater than K1.

As one embodiment, the first node U01 is one piece of user equipment.

As one embodiment, the first node U01 is one base station device.

As one embodiment, the first node U01 is one relay device.

As one embodiment, the second node N02 is one base station device.

As one embodiment, the second node N02 is one piece of user equipment.

As one embodiment, the second node N02 is one relay device.

As one embodiment, the second node N02 comprises one TRP.

As one embodiment, the second node N02 comprises two TRPs.

As one embodiment, the second node N02 comprises at least two TRPs.

As one embodiment, the first node U01 is one piece of user equipment and the second node N02 is one base station device.

As one embodiment, the first node U01 is one piece of user equipment and the second node N02 is one relay device.

As one embodiment, the first node U01 is one piece of user equipment and the second node N02 is one piece of user equipment.

As one embodiment, the first node U01 is one base station device, and the second node N02 is one base station device.

As one embodiment, the first node U01 is one relay device, and the second node N02 is one base station device.

As one embodiment, in response to the second node N02 receiving one preamble sent in the K1 time-frequency resource blocks, the first signaling is sent.

As one embodiment, in response to the second node N02 receiving at least one preamble sent in the K1 time-frequency resource blocks, the first signaling is sent.

As one embodiment, in response to the second node N02 receiving each preamble sent in the K1 time-frequency resource blocks, the first signaling is sent.

As one embodiment, recipients of the preamble sent in the K1 time-frequency resource blocks are all the second node N02.

As one sub-embodiment of this embodiment, the second node N02 is one TRP.

As one sub-embodiment of this embodiment, the second node N02 is one base station device.

As one sub-embodiment of this embodiment, the second node N02 is a maintaining base station of one serving cell of the first node U01.

As one sub-embodiment of this embodiment, the second node N02 is a maintaining base station of a PCell of the first node U01.

As one sub-embodiment of this embodiment, the second node N02 is a maintaining base station of a PSCell of the first node U01.

As one embodiment, recipients of the preambles sent in the K1 time-frequency resource blocks comprise a plurality of nodes, and the second node N02 is one of the plurality of nodes.

As one sub-embodiment of this embodiment, any of the plurality of nodes is one TRP.

As one sub-embodiment of this embodiment, any of the plurality of nodes is one base station device.

As one sub-embodiment of this embodiment, one of the plurality of nodes is a maintaining base station of one serving cell of the first node U01.

As one sub-embodiment of this embodiment, one of the plurality of nodes is a maintaining base station of a PCell of the first node U01.

As one sub-embodiment of this embodiment, one of the plurality of nodes is a maintaining base station of a PSCell of the first node U01.

As one embodiment, the first RRC message comprises at least one RRC message.

As one embodiment, the first RRC message comprises at least one RRC IE (Information Element).

As one embodiment, the first RRC message comprises at least one RRC field.

As one embodiment, the first RRC message comprises broadcast signaling.

As one embodiment, the first RRC message comprises unicast signaling.

As one embodiment, the first RRC message is transmitted by a BCCH (Broadcast Control Channel).

As one embodiment, the first RRC message comprises an SIB1 (System Information Block 1) message.

As one embodiment, the first RRC message belongs to one ServingCellConfigCommonSIB IE.

As one embodiment, the first RRC message belongs to one UplinkConfigCommonSIB IE.

As one embodiment, the first RRC message belongs to one BWP-UplinkCommon IE.

As one embodiment, the first RRC message belongs to one RACH-ConfigCommon IE.

As one embodiment, the first RRC message is transmitted by a DCCH (Dedicated Control Channel).

As one embodiment, the first RRC message comprises an RRCReconfiguration message.

As one embodiment, the first RRC message belongs to one RRCResume message.

As one embodiment, the first RRC message belongs to one RRCSetup message.

As one embodiment, the first RRC message belongs to one CellGroupConfig IE.

As one embodiment, the first RRC message belongs to one ReconfigurationWithSync domain.

As one embodiment, the first RRC message belongs to one ServingCellConfigCommon IE.

As one embodiment, the first RRC message belongs to one UplinkConfigCommon IE.

As one embodiment, the first RRC message belongs to one BWP-UplinkCommon IE.

As one embodiment, the first RRC message belongs to one ServingCellConfig IE.

As one embodiment, the first RRC message belongs to one BWP-Uplink IE.

As one embodiment, the first RRC message belongs to one RACH-ConfigCommon IE.

As one embodiment, the first RRC message comprises at least one RRC field, each of the at least one RRC field is used for determining at least one of the K1 time-frequency resource blocks, and each of the at least one RRC field comprises an index of at least one of the Q1 RS resources.

As one sub-embodiment of this embodiment, the at least one RRC field is K1 RRC fields, each of the K1 RRC domains is used for determining one of the K1 time-frequency resource blocks, and each of the K1 RRC fields comprises an index of at least one of the Q1 RS resources.

As one sub-embodiment of this embodiment, the at least one RRC field is Q1 RRC fields, each of the Q1 RRC fields is used for determining at least one of the K1 time-frequency resource blocks, and each of the Q1 RRC fields comprises an index of one of the Q1 RS resources.

As one sub-embodiment of this embodiment, the at least one RRC field is used for a configuration for one PRACH repetition.

As one sub-embodiment of this embodiment, the at least one RRC field is used for a configuration for a PRACH repetition under a given number of PRACH repetitions.

As one embodiment, the first RRC message comprises the RRC field indicating a given number of PRACH repetitions.

As one embodiment, the first RRC message indicates a given number of PRACH repetitions.

As one embodiment, the given number of PRACH repetitions is K1.

As one embodiment, the given number of PRACH repetitions is not less than K1.

As one embodiment, the dotted-line block F5.1 is optional.

As one embodiment, the dotted-line block F5.1 exists.

As one embodiment, the dotted-line block F5.1 does not exist.

As one embodiment, the dotted-line block F5.2 is optional.

As one embodiment, the dotted-line block F5.2 exists.

As one sub-embodiment of this embodiment, the first signaling is scrambled by one candidate RNTI.

As one sub-embodiment of this embodiment, the first signaling is scrambled by one of the at least one candidate RNTI.

As one sub-embodiment of this embodiment, the first signaling is scrambled by a first candidate RNTI.

As one sub-embodiment of this embodiment, the first signaling is scrambled by a second candidate RNTI.

As one sub-embodiment of this embodiment, the first signaling is received.

As one sub-embodiment of this embodiment, the first signaling is received by a first processor.

As one sub-embodiment of this embodiment, the random access response scheduled by the first signaling is received.

As one sub-embodiment of this embodiment, the random access response scheduled by the first signaling is a target random access response.

As one sub-embodiment of this embodiment, the random access response scheduled by the first signaling is not a target random access response.

As one sub-embodiment of this embodiment, in response to the first signaling being received, if the random access response scheduled by the first signaling is the target random access response, it is considered that reception of the random access response is successful.

As one sub-embodiment of this embodiment, in response to the first signaling being received, if the random access response scheduled by the first signaling is not the target random access response, the random access response is not considered to be received successfully.

As one sub-embodiment of this embodiment, in response to the first signaling being received, if the random access response scheduled by the first signaling is not the target random access response, the first signaling is continued to be monitored.

As one embodiment, the dotted-line block F5.2 does not exist.

As one sub-embodiment of this embodiment, the first signaling is not received.

As one embodiment, the target random access response comprises a first RAPID (Random Access Preamble IDentifier) field, and the first RAPID field comprises one random access preamble identifier; and the random access preamble identifier in the first RAPID field matches an identifier of the preamble sent in the K1 time-frequency resource blocks.

As one sub-embodiment of this embodiment, the sentence that the random access preamble identifier in the first RAPID field matches an identifier of the preamble sent in the K1 time-frequency resource blocks means: the random access preamble identifier in the first RAPID field matches the identifier of the preamble sent in any of the K1 time-frequency resource blocks.

As one sub-embodiment of this embodiment, the sentence that the random access preamble identifier in the first RAPID field matches an identifier of the preamble sent in the K1 time-frequency resource blocks means: the random access preamble identifier in the first RAPID field matches the identifier of the preamble sent in one of the K1 time-frequency resource blocks.

As one sub-embodiment of this embodiment, the sentence that the random access preamble identifier in the first RAPID field matches an identifier of the preamble sent in the K1 time-frequency resource blocks means: the random access preamble identifier in the first RAPID field matches the identifier of the preamble sent in one time-frequency resource block in one time-frequency resource block group.

As one sub-embodiment of this embodiment, the sentence that the random access preamble identifier in the first RAPID field matches an identifier of the preamble sent in the K1 time-frequency resource blocks means: the random access preamble identifier in the first RAPID field matches the identifier of the preamble sent in one time-frequency resource block in one time-frequency resource block group; and the first signaling is scrambled by the candidate RNTI determined according to the one time-frequency resource block group.

As one sub-embodiment of this embodiment, the sentence that the random access preamble identifier in the first RAPID field matches an identifier of the preamble sent in the K1 time-frequency resource blocks means: the random access preamble identifier in the first RAPID field matches the identifier of the preamble sent in one time-frequency resource block in a first time-frequency resource block group; and the first signaling is scrambled by the first candidate RNTI.

As one sub-embodiment of this embodiment, the sentence that the random access preamble identifier in the first RAPID field matches an identifier of the preamble sent in the K1 time-frequency resource blocks means: the random access preamble identifier in the first RAPID field matches the identifier of the preamble sent in one time-frequency resource block in a second time-frequency resource block group; and the first signaling is scrambled by the second candidate RNTI.

As one embodiment, this example does not limit the implementation order of the step S5102 and the step S5103.

### Embodiment 6

Embodiment 6 illustrates a schematic diagram in which the number of at least one candidate RNTI used to monitor first signaling is related to Q1 according to one embodiment of the present application.

In Embodiment 6, the phase of the number of the at least one candidate RNTI used to monitor the first signaling being related to Q1 comprises: the number of the at least one candidate RNTI used to monitor the first signaling is equal to 1 and Q1 is equal to 1, or the number of the at least one candidate RNTI used to monitor the first signaling is greater than 1 and Q1 is greater than 1.

As one embodiment, a preamble is sent in K1 time-frequency resource blocks, and K1 is an integer greater than 1; after one of the K1 time-frequency resource blocks, using at least one candidate RNTI to monitor first signaling, the first signaling being used for scheduling a random access response, wherein each of the K1 time-frequency resource blocks is configured for the preamble; the K1 time-frequency resource blocks are associated with Q1 RS resources, and the Q1 RS resources comprise at least one RS resource; the number of the at least one candidate RNTI used to monitor the first signaling is equal to 1 and Q1 is equal to 1, or the number of the at least one candidate RNTI used to monitor the first signaling is greater than 1 and Q1 is greater than 1; Q1 is a positive integer not greater than K1.

As one embodiment, a preamble is sent in K1 time-frequency resource blocks, and K1 is an integer greater than 1; the K1 time-frequency resource blocks are associated with Q1 RS resources, and the Q1 RS resources comprise at least one RS resource; After one of the K1 time-frequency resource blocks, if Q1 is equal to 1, one candidate RNTI is used to monitor the first signaling, and if Q1 is greater than 1, more than one candidate RNTI is used to monitor the first signaling; the first signaling is used for scheduling a random access response; wherein each of the K1 time-frequency resource blocks is configured for the preamble; the number of the at least one candidate RNTI used to monitor the first signaling is equal to 1 and Q1 is equal to 1, or the number of the at least one candidate RNTI used to monitor the first signaling is greater than 1 and Q1 is greater than 1; Q1 is a positive integer not greater than K1.

As one embodiment, as long as Q1 is equal to 1, the number of the at least one candidate RNTI used to monitor the first signaling is equal to 1; and as long as Q1 is greater than 1, the number of the at least one candidate RNTI used to monitor the first signaling is greater than 1.

As one embodiment, if Q1 is equal to 1, the number of the at least one candidate RNTI used to monitor the first signaling is equal to 1; and if Q1 is greater than 1, the number of the at least one candidate RNTI used to monitor the first signaling is greater than 1.

As one embodiment, Q1 equal to 1 is used for determining that the number of the at least one candidate RNTI used to monitor the first signaling is equal to 1; and Q1 greater than 1 is used for determining that the number of the at least one candidate RNTI used to monitor the first signaling is greater than 1.

As one embodiment, if Q1 is equal to 1, one candidate RNTI is used to monitor the first signaling; and if Q1 is greater than 1, more than one candidate RNTI is used to monitor the first signaling.

### Embodiment 7

Embodiment 7 illustrates a schematic diagram in which the number of at least one candidate RNTI used to monitor first signaling is related to Q1 according to another embodiment of the present application.

In Embodiment 7, the phase of the number of the at least one candidate RNTI used to monitor the first signaling being related to Q1 comprises: the number of the at least one candidate RNTI used to monitor the first signaling is equal to Q1.

As one embodiment, a preamble is sent in K1 time-frequency resource blocks, and K1 is an integer greater than 1; after one of the K1 time-frequency resource blocks, using at least one candidate RNTI to monitor first signaling, the first signaling being used for scheduling a random access response, wherein each of the K1 time-frequency resource blocks is configured for the preamble; the K1 time-frequency resource blocks are associated with Q1 RS resources, and the Q1 RS resources comprise at least one RS resource; the number of the at least one candidate RNTI used to monitor the first signaling is equal to Q1 and; Q1 is a positive integer not greater than K1.

As one embodiment, a preamble is sent in K1 time-frequency resource blocks, and K1 is an integer greater than 1; after one of the K1 time-frequency resource blocks, Q1 candidate RNTIs are used to monitor the first signaling, and the first signaling is used for scheduling the random access response, wherein each of the K1 time-frequency resource blocks is configured for the preamble; the K1 time-frequency resource blocks are associated with Q1 RS resources, and the Q1 RS resources comprise at least one RS resource; Q1 is a positive integer not greater than K1.

As one embodiment, the number of the at least one candidate RNTI used to monitor the first signaling is equal to the number of RS resources associated with the K1 time-frequency resource blocks.

As one embodiment, Q1 candidate RNTIs are used to monitor the first signaling.

As one embodiment, the K1 time-frequency resource blocks consist of Q1 time-frequency resource block groups, each of the Q1 time-frequency resource block groups is used for determining one candidate RNTI, and each of the Q1 time-frequency resource block groups comprises at least one of the K1 time-frequency resource blocks.

### Embodiment 8

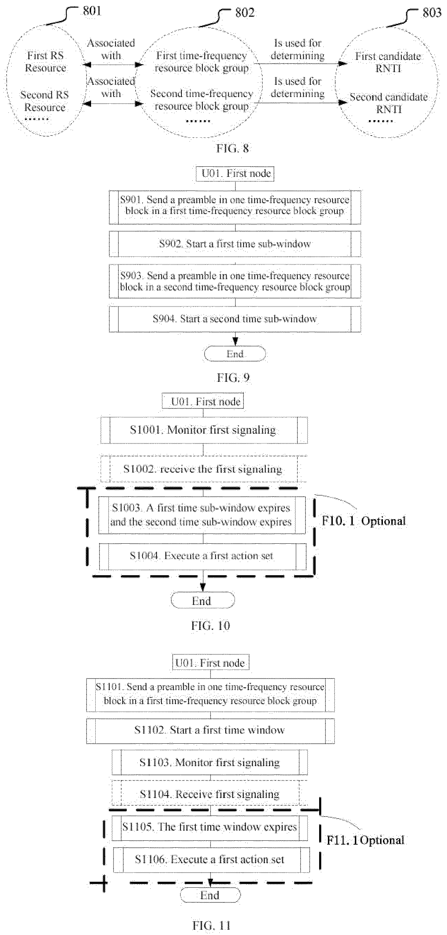

Embodiment 8 illustrates a schematic diagram of the relationship among a candidate RNTI, a time-frequency resource block group and an RS resource according to one embodiment of the present application. In FIG. 8, a dotted-line ellipse 801 represents Q1 RS resources associated with K1 time-frequency resource blocks, the Q1 RS resources comprise at least a first RS resource and a second RS resource, and the ellipsis in the dotted-line ellipse 801 represents other RS resources; the dotted-line ellipse 802 represents K1 time-frequency resource blocks, and the K1 time-frequency resource blocks comprise at least a first time-frequency resource block group and a second time-frequency resource block group, and the ellipsis in the dotted-line ellipse 802 represents other time-frequency resource block groups; and the dotted-line ellipse 803 represents at least one candidate RNTI used to monitor first signaling, and the ellipsis in the dotted-line ellipse 803 represents other candidate RNTIs.

In Embodiment 8, the at least one candidate RNTI used to monitor the first signaling comprises at least a first candidate RNTI and a second candidate RNTI; a first time-frequency resource block group is used for determining the first candidate RNTI, the first time-frequency resource block group comprises at least one of the K1 time-frequency resource blocks, and the first time-frequency resource block group is associated with a first RS resource; a second time-frequency resource block group is used for determining the second candidate RNTI, the second time-frequency resource block group comprises at least one of the K1 time-frequency resource blocks, and the second time-frequency resource block group is associated with a second RS resource; the first RS resource and the second RS resource are respectively one of the Q1 RS resources; and the Q1 is greater than 1.

As one embodiment, the ellipsis in the dotted-line ellipse 801 exists.

As one embodiment, the ellipsis in the dotted-line ellipse 801 does not exist.

As one embodiment, the ellipsis in the dotted-line ellipse 802 exists.

As one embodiment, the ellipsis in the dotted-line ellipse 802 does not exist.

As one embodiment, the ellipsis in the dotted-line ellipse 803 exists.

As one embodiment, the ellipsis in the dotted-line ellipse 803 does not exist.

As one embodiment, the Q1 is equal to 2.

As one embodiment, the Q1 is greater than 2.

As one embodiment, preambles sent in each time-frequency resource block in the first time-frequency resource block group are the same.

As one embodiment, preambles sent in at least two time-frequency resource blocks in the first time-frequency resource block group are different.

As one embodiment, preambles sent in each time-frequency resource block in the second time-frequency resource block group are the same.

As one embodiment, preambles sent in at least two time-frequency resource blocks in the second time-frequency resource block group are different.

As one embodiment, any preamble sent in a time-frequency resource block in the first time-frequency resource block group is different from any preamble sent in a time-frequency resource block in the second time-frequency resource block group.

As one embodiment, any preamble sent in a time-frequency resource block in the first time-frequency resource block group is the same as any preamble sent in a time-frequency resource block in the second time-frequency resource block group.

As one embodiment, the at least one candidate RNTI used to monitor the first signaling comprises only the first candidate RNTI and the second candidate RNTI.

As one embodiment, the at least one candidate RNTI used to monitor the first signaling comprises at least one candidate RNTI other than the first candidate RNTI and the second candidate RNTI.

As one embodiment, the first time-frequency resource block group is used for determining one candidate RNTI.

As one embodiment, each time-frequency resource block in the first time-frequency resource block group is used for determining the first candidate RNTI.

As one embodiment, at least one time-frequency resource block in the first time-frequency resource block group is used for determining the first candidate RNTI.

As one embodiment, only one time-frequency resource block in the first time-frequency resource block group is used for determining the first candidate RNTI.

As one embodiment, only a reference time-frequency resource block in the first time-frequency resource block group is used for determining the first candidate RNTI.

As one embodiment, the first time-frequency resource block group is used for determining one candidate RNTI.

As one embodiment, each time-frequency resource block in the first time-frequency resource block group is used for determining the first candidate RNTI.

As one embodiment, at least one time-frequency resource block in the first time-frequency resource block group is used for determining the first candidate RNTI.

As one embodiment, only one time-frequency resource block in the first time-frequency resource block group is used for determining the first candidate RNTI.

As one embodiment, only a reference time-frequency resource block in the first time-frequency resource block group is used for determining the first candidate RNTI.

As one embodiment, the sentence that one time-frequency resource block is used for determining the first candidate RNTI comprises: at least one of a time domain position or a frequency domain position or an uplink carrier occupied by one time-frequency resource block is used for determining the first candidate RNTI.

As one embodiment, the sentence that one time-frequency resource block is used for determining the first candidate RNTI comprises: at least one of an index of a first OFDM symbol of the one time-frequency resource block or an index of a first slot of the one time-frequency resource block in one system frame or an index of the one time-frequency resource block in a frequency domain or an uplink carrier of the one time-frequency resource block is used for determining the first candidate RNTI.

As one embodiment, a reference time-frequency resource block in onetime-frequency resource block group is used for determining one candidate RNTI, and the one candidate RNTI = 1 + s_id + 14 × t_id + 14 × 80 × f_id + 14 × 80 × 8 × ul_carrier_id.

As one sub-embodiment of this embodiment, the one time-frequency resource block group is the first time-frequency resource block group, and the one candidate RNTI is the first candidate RNTI.

As one sub-embodiment of this embodiment, the one time-frequency resource block group is the second time-frequency resource block group, and the one candidate RNTI is the second candidate RNTI.

As one sub-embodiment of this embodiment, the s_id is related to the OFDM symbol occupied by the reference time-frequency resource block in the one time-frequency resource block group used for determining the one candidate RNTI.

As one sub-embodiment of this embodiment, the s_id is an index of a first OFDM symbol of the reference time-frequency resource block in the time-frequency resource block group used for determining the one candidate RNTI.

As one sub-embodiment of this embodiment, the t_id is related to the position of the reference time-frequency resource block in the time-frequency resource block group used for determining the one candidate RNTI in one system frame.

As one sub-embodiment of this embodiment, the t_id is an index of a first slot of the reference time-frequency resource block in the time-frequency resource block group used for determining the one candidate RNTI in one system frame.

As one sub-embodiment of this embodiment, for µ = {0, 1, 2, 3}, a subcarrier spacing used for determining the t_id is based on a value of µ in Section 5.3.2 of TS 38.211; and for µ = {5, 6}, the t_id is an index of a 120 kHz slot comprising the reference time-frequency resource block in the time-frequency resource block group used for determining the one candidate RNTI in one system frame.

As one sub-embodiment of this embodiment, the f_id is an index of the reference time-frequency resource block in the time-frequency resource block group used for determining the one candidate RNTI in the frequency domain.

As one sub-embodiment of this embodiment, the ul_carrier_id indicates an uplink carrier for the reference time-frequency resource block in a time-frequency resource block group used for determining the one candidate RNTI.

As one sub-embodiment of this embodiment, if the ul_carrier_id is equal to 0, an uplink carrier for the reference time-frequency resource block in the time-frequency resource block group used for determining the one candidate RNTI is an NUL carrier; and If the ul_carrier_id_1 is equal to 1, the uplink carrier for the reference time-frequency resource block in the time-frequency resource block group used for determining the one candidate RNTI is an SUL carrier.

As one embodiment, the first time-frequency resource block group is configured for the first RS resource.

As one embodiment, the first time-frequency resource block group is configured with an index of the first RS resource.

As one embodiment, each time-frequency resource block in the first time-frequency resource block group is configured with an index of the first RS resource.

As one embodiment, each time-frequency resource block in the first time-frequency resource block group is configured with an index of the first RS resource.

As one embodiment, the second time-frequency resource block group is configured for the second RS resource.

As one embodiment, the second time-frequency resource block group is configured with an index of the second RS resource.

As one embodiment, each time-frequency resource block in the second time-frequency resource block group is configured with an index of the second RS resource.

As one embodiment, each time-frequency resource block in the second time-frequency resource block group is configured with an index of the second RS resource.

As one embodiment, the number of time-frequency resource blocks included in the first time-frequency resource block group is equal to the number of time-frequency resource blocks included in the second time-frequency resource block group.

As one embodiment, the number of time-frequency resource blocks included in the first time-frequency resource block group is not equal to the number of time-frequency resource blocks included in the second time-frequency resource block group.

As one embodiment, any time-frequency resource block in the first time-frequency resource block group is different from any time-frequency resource block in the second time-frequency resource block group.

As one embodiment, at least one time-frequency resource block in the first time-frequency resource block group is different from any time-frequency resource block in the second time-frequency resource block group.

As one embodiment, each time-frequency resource block in the first time-frequency resource block group is different from any time-frequency resource block in the second time-frequency resource block group.

As one embodiment, the first RS resource is different from the second RS resource.

As one embodiment, the index of the first RS resource is different from the index of the second RS resource.

As one embodiment, the first RS resource and the second RS resource are not in QCL (Quasi-colocation).

As one embodiment, the Q1 RS resources are used for determining Q1 time-frequency resource block groups, and the Q1 time-frequency resource block groups are used for determining that the number of the at least one candidate RNTI used to monitor the first signaling is equal to Q1.

As one embodiment, the sentence that "the K1 time-frequency resource blocks are associated with Q1 RS resources" comprises: the K1 time-frequency resource blocks are determined according to the Q1 RS resources.

As one embodiment, the sentence that "the K1 time-frequency resource blocks are associated with Q1 RS resources" comprises: the Q1 RS resources are used for determining Q1 time-frequency resource block groups, and the K1 time-frequency resource blocks consist of the Q1 time-frequency resource block groups.

As one embodiment, the K1 time-frequency resource blocks consist of at least two time-frequency resource block groups, each of the at least two time-frequency resource block groups is used for determining one candidate RNTI, and each of the at least two time-frequency resource block groups comprises at least one of the K1 time-frequency resource blocks; the first time-frequency resource block group and the second time-frequency resource block group are respectively one time-frequency resource block group in the at least two time-frequency resource block groups.

As one embodiment, each time-frequency resource block in each of the at least two time-frequency resource block groups is used for determining one candidate RNTI.

As one embodiment, at least one time-frequency resource block in each of the at least two time-frequency resource block groups is used for determining one candidate RNTI.

As one embodiment, only one time-frequency resource block in each of the at least two time-frequency resource block groups is used for determining one candidate RNTI.

As one embodiment, only the reference time-frequency resource block in each of the at least two time-frequency resource block groups is used for determining one candidate RNTI.

As one embodiment, the first time-frequency resource block group is the earliest one of the at least two time-frequency resource block groups in the time domain.

As one embodiment, the first time-frequency resource block group and the second time-frequency resource block group are any two of the at least two time-frequency resource block groups.

As one embodiment, the first time-frequency resource block group and the second time-frequency resource block group are any two of the at least two time-frequency resource block groups, and the first time-frequency resource block group is earlier than the second time-frequency resource block group in the time domain.

As one embodiment, the number of the at least one candidate RNTI used to monitor the first signaling is equal to the number of time-frequency resource block groups in the K1 time-frequency resource blocks.

As one embodiment, the number of time-frequency resource block groups in the K1 time-frequency resource blocks is equal to Q1.

As one embodiment, the number of time-frequency resource block groups in the K1 time-frequency resource blocks is not equal to Q1.

As one embodiment, the K1 time-frequency resource blocks consist of Q1 time-frequency resource block groups.

### Embodiment 9

Embodiment 9 illustrates an operation flow chart of a first time sub-window and a second time sub-window according to one embodiment of the present application, as shown in FIG. 9. It is particularly explained that the order in the present example does not limit the signal transmission order and the implementation order in the present application.

For **a first node U01**, in step S901, a preamble is sent in one time-frequency resource block in a first time-frequency resource block group; in step S902, the first time sub-window is started along with the preamble sent in the one time-frequency resource block in the first time-frequency resource block group; in step S903, the preamble is sent in one time-frequency resource block in a second time-frequency resource block group; and in step S5104, the second time sub-window is started along with the preamble sent in the one time-frequency resource block in the second time-frequency resource block group.

As one embodiment, after the one of the K1 time-frequency resource blocks, and when the first time sub-window is running, at least one candidate RNTI is used to monitor first signaling.

As one embodiment, after the one of the K1 time-frequency resource blocks, and when the second time sub-window is running, at least one candidate RNTI is used to monitor first signaling.

As one embodiment, after the one of the K1 time-frequency resource blocks, and when one time sub-window is running, at least one candidate RNTI is used to monitor first signaling.

As one embodiment, one time sub-window is started along with the preamble sent in one time-frequency resource block in each of the K1 time-frequency resource blocks.

As one embodiment, one time sub-window is started along with the preamble sent in a reference time-frequency resource block in each of the K1 time-frequency resource blocks.

As one embodiment, one time sub-window is started along with a first PDCCH occasion after the preamble is sent in a reference time-frequency resource block in each of the K1 time-frequency resource blocks.

As one embodiment, the first time window does not exist.

As one embodiment, the first time sub-window is one time window.

As one embodiment, the length of the first time sub-window is configurable.

As one embodiment, the length of the first time sub-window is preconfigured.

As one embodiment, the first time sub-window is one ra-ResponseWindow.

As one embodiment, the name of the first time sub-window comprises ra-ResponseWindow.

As one embodiment, the phrase of "along with a preamble sent in one time-frequency resource block in the first time-frequency resource block group" comprises: along with the preamble sent in the reference time-frequency resource block in the first time-frequency resource block group.

As one embodiment, the phrase of "along with a preamble sent in one time-frequency resource block in the first time-frequency resource block group" comprises: the first PDCCH occasion after the preamble is sent in the reference time-frequency resource block in the first time-frequency resource block group.

As one embodiment, the phrase of "along with a preamble sent in one time-frequency resource block in the first time-frequency resource block group" comprises: the first PDCCH occasion after the preamble is sent in the earliest one time-frequency resource block in the first time-frequency resource block group in a time domain.

As one embodiment, the second time sub-window is one time window.

As one embodiment, the length of the second time sub-window is configurable.

As one embodiment, the length of the second time sub-window is preconfigured.

As one embodiment, the second time sub-window is one ra-ResponseWindow.

As one embodiment, the name of the second time sub-window comprises ra-ResponseWindow.

As one embodiment, the phrase of "along with a preamble sent in one time-frequency resource block in the second time-frequency resource block group" comprises: along with the preamble sent in the reference time-frequency resource block in the second time-frequency resource block group.

As one embodiment, the phrase of "along with a preamble sent in one time-frequency resource block in the second time-frequency resource block group" comprises: along with the preamble sent in the earliest one time-frequency resource block in the first time-frequency resource block group in the time domain.

As one embodiment, the phrase of "along with a preamble sent in one time-frequency resource block in the second time-frequency resource block group" comprises: the first PDCCH occasion after the preamble is sent in the latest time-frequency resource block in the second time-frequency resource block group in a time domain.

As one embodiment, the phrase of "along with a preamble sent in one time-frequency resource block in the second time-frequency resource block group" comprises: the first PDCCH occasion after the preamble is sent in the earliest time-frequency resource block in the second time-frequency resource block group in a time domain.

As one embodiment, during the running of the first time sub-window, the first node U01 uses the first candidate RNTI to monitor the first signaling.

As one embodiment, only during the running of the first time sub-window, the first node U01 uses the first candidate RNTI to monitor the first signaling.

As one embodiment, if the first time sub-window is not running, the first node U01 does not use a first candidate RNTI to monitor the first signaling.

As one embodiment, if the first time sub-window is not running, the first node U01 is not required to use a first candidate RNTI to monitor the first signaling.

As one embodiment, during the running of the second time sub-window, the first node U01 uses a second candidate RNTI to monitor the first signaling.

As one embodiment, only during the running of the second time sub-window, the first node U01 uses a second candidate RNTI to monitor the first signaling.

As one embodiment, if the second time sub-window is not running, the first node U01 does not use a second candidate RNTI to monitor the first signaling.

As one embodiment, if the second time sub-window is not running, the first node U01 is not required to use a second candidate RNTI to monitor the first signaling.

As one embodiment, the first time sub-window overlaps the second time sub-window in the time domain.

As one embodiment, the first time sub-window does not overlap the second time sub-window in the time domain.

As one embodiment, a time interval between a start moment of the first time sub-window and a start moment of the second time sub-window comprises at least one time sub-window.

As one embodiment, a time interval between a start moment of the first time sub-window and a start moment of the second time sub-window does not comprise any time sub-window.

### Embodiment 10

Embodiment 10 illustrates a flow chart in which a first time sub-window expiring and a second time sub-window expiring are used for triggering a first action set according to one embodiment of the present application, as shown in FIG. 10. It is particularly explained that the order in the present example does not limit the signal transmission order and the implementation order in the present application.

For **a first node U01**, in step S1001, first signaling is monitored; in step S1002, the first signaling is received; in step S1003, the first time sub-window expires and the second time sub-window expires; and in step S1004, a first action set is executed.

As one embodiment, the step S1002 is optional.

As one embodiment, the step S1002 exists.

As one sub-embodiment of this embodiment, the first signaling is received during the running of the first time sub-window.

As one subsidiary embodiment of this sub-embodiment, in response to the first signaling being received, if a random access response scheduled by the first signaling is a target random access response, the first time sub-window is stopped.

As one subsidiary embodiment of this sub-embodiment, in response to the first signaling being received, if a random access response scheduled by the first signaling is a target random access response, the first time sub-window is not stopped and at least one candidate RNTI is continued to be used to monitor a DCI used for scheduling the random access response.

As one sub-embodiment of this embodiment, the first signaling is received during the running of the second time sub-window.

As one subsidiary embodiment of this sub-embodiment, in response to the first signaling being received, if a random access response scheduled by the first signaling is a target random access response, the second time sub-window is stopped.

As one subsidiary embodiment of this sub-embodiment, in response to the first signaling being received, if a random access response scheduled by the first signaling is a target random access response, the second time sub-window is not stopped and at least one candidate RNTI is continued to be used to monitor a DCI used for scheduling the random access response.

As one embodiment, the step S1002 does not exist.

As one embodiment, the dotted-line block F10.1 is optional.

As one embodiment, the dotted-line block F10.1 exists.

As one embodiment, the dotted-line block F10.1 does not exist.

As one embodiment, at least the first time sub-window expiring and the second time sub-window expiring and the target random access response being not received are used for triggering the first action set.

As one embodiment, the sentence that "at least the first time sub-window expiring and the second time sub-window expiring are used for triggering the first action set" comprises: when at least the first time sub-window and the second time sub-window both expire, the first action set is executed.

As one embodiment, the sentence that "at least the first time sub-window expiring and the second time sub-window expiring are used for triggering the first action set" comprises: when the first time sub-window expires, if the second time sub-window has not expired, the first action set is not executed.

As one embodiment, the sentence that "at least the first time sub-window expiring and the second time sub-window expiring are used for triggering the first action set" comprises: when the first time sub-window expires, if the second time sub-window is running, the first action set is not executed.

As one embodiment, the sentence that "at least the first time sub-window expiring and the second time sub-window expiring are used for triggering the first action set" comprises: when the first time sub-window expires, if the second time sub-window is not started, the first action set is not executed.

As one embodiment, the sentence that "at least the first time sub-window expiring and the second time sub-window expiring are used for triggering the first action set" comprises: when time sub-windows started along with preambles sent in one time-frequency resource block in each of the K1 time-frequency resource blocks all expire, the first action set is executed.

As one embodiment, the first action set comprises increasing PREAMBLE_TRANSMISSION_COUNTER.

As one embodiment, the behavior of increasing PREAMBLE_TRANSMISSION_COUNTER comprises: increasing PREAMBLE_TRANSMISSION_COUNTER by 1.

As one embodiment, the behavior of increasing PREAMBLE_TRANSMISSION_COUNTER comprises: increasing PREAMBLE_TRANSMISSION_COUNTER by at least 1.

As one embodiment, the behavior of increasing PREAMBLE_TRANSMISSION_COUNTER comprises: increasing PREAMBLE_TRANSMISSION_COUNTER by K1.

As one embodiment, the first action set comprises determining whether to indicate a random access problem to a higher layer according to whether PREAMBLE_TRANSMISSION_COUNTER reaches a first threshold value; and the first threshold value is a positive integer.

As one embodiment, the first action set comprises determining whether to consider that the random access process is not successfully completed according to whether PREAMBLE_TRANSMISSION_COUNTER reaches a first threshold value; the first threshold value is a positive integer.

As one embodiment, the first threshold value is preambleTransMax + 1.

As one embodiment, the first threshold value is configurable.

### Embodiment 11

Embodiment 11 illustrates a first time window according to one embodiment of the present application as an operation flow chart, as shown in FIG. 11. It is particularly explained that the order in the present example does not limit the signal transmission order and the implementation order in the present application.

For **a first node U01**, in step S1101, a preamble is sent in one of K1 time-frequency resource blocks; in step S1102, the first time window is started along with a preamble sent in the one of the K1 time-frequency resource blocks; in step S1103, first signaling is monitored; in step S1104, the first signaling is received; in step S1105, the first time window expires; and in step S1106, a first action set is executed.

As one embodiment, the step S1104 is optional.

As one embodiment, the step S1104 exists.

As one sub-embodiment of this embodiment, the first signaling is received during the running of the first time window.

As one sub-embodiment of this sub-embodiment, in response to the first signaling being received, if a random access response scheduled by the first signaling is a target random access response, the first time window is stopped.

As one sub-embodiment of this sub-embodiment, in response to the first signaling being received, if a random access response scheduled by the first signaling is a target random access response, the first time window is not stopped and at least one candidate RNTI is continued to be used to monitor a DCI used for scheduling the random access response.

As one embodiment, the step S1104 does not exist.

As one embodiment, the dotted-line block F11.1 is optional.

As one embodiment, the dotted-line block F11.1 exists.

As one embodiment, the dotted-line block F11.1 does not exist.

As one embodiment, the meaning of "along with a preamble sent in one time-frequency resource block" comprises: when the preamble is sent in the one time-frequency resource block.

As one embodiment, the meaning of "along with a preamble sent in one time-frequency resource block" comprises: after the preamble is sent in the one time-frequency resource block.

As one embodiment, the meaning of "along with a preamble sent in one time-frequency resource block" comprises: a first PDCCH occasion after the end of sending the preamble in the one time-frequency resource block.

As one embodiment, the moment when the first time window is started is related to the preamble sent in one of the K1 time-frequency resource blocks.

As one embodiment, the moment when the first time window is started is related to a cut-off moment for sending the preamble in one of the K1 time-frequency resource blocks.

As one embodiment, the moment when the first time window is started is related to a configuration of a PDCCH occasion.

As one embodiment, the moment when each time sub-window is started is related to the preamble sent in one of the K1 time-frequency resource blocks.

As one embodiment, the moment when each time sub-window is started is related to a cut-off moment for sending the preamble in one of the K1 time-frequency resource blocks.

As one embodiment, the moment when each time sub-window is started is related to a configuration of a PDCCH occasion.

As one embodiment, the first time window is one time window.

As one embodiment, the length of the first time window is configurable.

As one embodiment, the length of the first time window is preconfigured.

As one embodiment, the first time window is one ra-ResponseWindow.

As one embodiment, the name of the first time window comprises ra-ResponseWindow.

As one embodiment, during the running of the first time window, the first signaling is monitored.

As one embodiment, the first time window is used to monitor the first signaling.

As one embodiment, the behavior of "starting the first time window along with a preamble sent in one of the K1 time-frequency resource blocks" comprises: starting or restarting the first time window along with the preamble sent in each of the K1 time-frequency resource blocks.

As one sub-embodiment of this embodiment, if the first time window is not running, the first time window is started along with the preamble sent in each of the K1 time-frequency resource blocks.

As one sub-embodiment of this embodiment, if the first time window is running, the first time window is restarted along with the preamble sent in each of the K1 time-frequency resource blocks.

As one embodiment, the behavior of "starting the first time window along with a preamble sent in one of the K1 time-frequency resource blocks" comprises: starting the first time window along with the preamble sent in a reference time-frequency resource block of the K1 time-frequency resource blocks.

As one embodiment, the behavior of "starting the first time window along with a preamble sent in one of the K1 time-frequency resource blocks" comprises: starting the first time window along with the preamble sent in one of the time-frequency resource blocks in a first time-frequency resource block group.

As one sub-embodiment of this embodiment, the first time window is started along with the preamble sent in the reference time-frequency resource block in the first time-frequency resource block group.

As one sub-embodiment of this embodiment, sending the preamble in the reference time-frequency resource block in a second time-frequency resource block group does not affect the running state of the first time window.

As one sub-embodiment of this embodiment, the first time window is not restarted along with the preamble sent in the reference time-frequency resource block in the second time-frequency resource block group.

As one sub-embodiment of this embodiment, the first time window is started or restarted along with the preamble sent in the reference time-frequency resource block in the first time-frequency resource block group.

As one sub-embodiment of this embodiment, the first time window is restarted along with the preamble sent in the reference time-frequency resource block in the second time-frequency resource block group.

As one embodiment, the reference time-frequency resource block of the K1 time-frequency resource blocks is the earliest one of the K1 time-frequency resource blocks in the time domain.

As one embodiment, the reference time-frequency resource block of the K1 time-frequency resource blocks is the latest one of the K1 time-frequency resource blocks in the time domain.

As one embodiment, the reference time-frequency resource block in one time-frequency resource block group is the earliest one time-frequency resource block in the time-frequency resource block group in the time domain.

As one embodiment, the reference time-frequency resource block in one time-frequency resource block group is the latest one time-frequency resource block in the time-frequency resource block group in the time domain.

As one embodiment, the reference time-frequency resource block in one time-frequency resource block group is one time-frequency resource block with the earliest cut-off moment in the time-frequency resource block group.

As one embodiment, the reference time-frequency resource block in one time-frequency resource block group is one time-frequency resource block with the latest cut-off moment in the time-frequency resource block group.

As one embodiment, the reference time-frequency resource block in the first time-frequency resource block group is earlier than the reference time-frequency resource block in the second time-frequency resource block group in the time domain.

As one embodiment, the cut-off moment of the reference time-frequency resource block in the first time-frequency resource block group is earlier than the cut-off moment of the reference time-frequency resource block in the second time-frequency resource block group.

As one embodiment, the first time window is started along with the preamble sent in one of the K1 time-frequency resource blocks; and the first time sub-window is started along with the preamble sent in one time-frequency resource block in the first time-frequency resource block group; and the second time sub-window is started along with the preamble sent in one the time-frequency resource block in the second time-frequency resource block group.

As one sub-embodiment of this embodiment, the first time sub-window and the second time sub-window exist, and the first time window exists.

As one sub-embodiment of this embodiment, any time sub-window expiring is not used for triggering the first action set.

As one sub-embodiment of this embodiment, when all time sub-windows expire, if the first time window is running, the first action set is not triggered.

As one sub-embodiment of this embodiment, when the first time window expires, no matter whether any time sub-window is running, the first action set is triggered.

As one embodiment, only the first time window is started along with the preamble sent in one of the K1 time-frequency resource blocks.

As one sub-embodiment of this embodiment, any time sub-window is not started along with the preamble sent in any of the K1 time-frequency resource blocks.

As one sub-embodiment of this embodiment, during the running of the first time window, any time sub-window is not started.

As one sub-embodiment of this embodiment, any time sub-window is not configured.

As one sub-embodiment of this embodiment, the first time sub-window and the second time sub-window do not exist, and the first time window exists.

As one sub-embodiment of this embodiment, along with the preamble sent in one time-frequency resource block in the first time-frequency resource block group, a first candidate RNTI is started to be used to monitor the first signaling; and along with the preamble sent in one time-frequency resource block in the second time-frequency resource block group, a second candidate RNTI is started to be used to monitor the first signaling.

As one sub-embodiment of this embodiment, after starting to use the first candidate RNTI to monitor the first signaling, the first candidate RNTI is used to monitor the first signaling until the first time window expires.

As one sub-embodiment of this embodiment, after starting to use the first candidate RNTI to monitor the first signaling, the first candidate RNTI is used to monitor the first signaling until the second candidate RNTI is used to monitor the first signaling.

As one sub-embodiment of this embodiment, after starting to use the second candidate RNTI to monitor the first signaling, the second candidate RNTI is used to monitor the first signaling until the first time window expires.

As one embodiment, the first time window expiring and the target random access response being received are used for triggering the first action set.

As one embodiment, the first time window expiring and the preamble being sent in each of the K1 time-frequency resource blocks are used for triggering the first action set.

As one embodiment, the first time window expiring and the preamble being sent in each of the K1 time-frequency resource blocks and the target random access response being received are used for triggering the first action set.

As one embodiment, when the first time window expires, the first action set is executed.

As one embodiment, when the first time window expires and the preamble is sent in each of the K1 time-frequency resource blocks, the first action set is executed.

As one embodiment, when the first time window expires, if the preamble has not been sent in at least one of the K1 time-frequency resource blocks, the first action set is not triggered.

As one embodiment, when the first time window expires and the target random access response is not received, the first action set is executed.

As one embodiment, when the first time window expires and the preamble is sent in each of the K1 time-frequency resource blocks and the target random access response is received, the first action set is executed.

As one embodiment, at least during the running of the first time window, the first action set is not triggered.

As one embodiment, at least when the first time window expires or after the first time window expires, the first action set is triggered.

### Embodiment 12

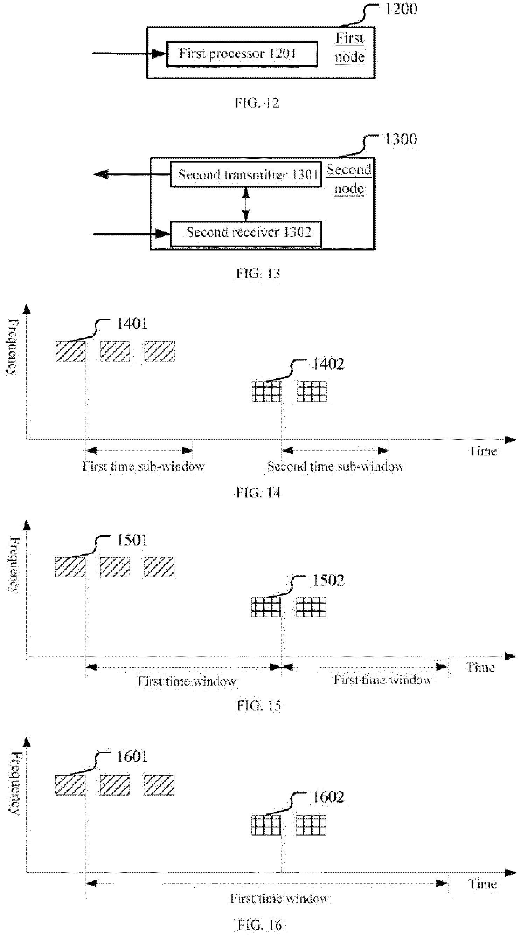

Embodiment 12 illustrates a structural block diagram of a processing device used in a first node according to one embodiment of the present application, as shown in FIG. 12. In FIG. 12, a processing device 1200 in a first node comprises a first processor 1201.
a first processor for sending a preamble in K1 time-frequency resource blocks, K1 being an integer greater than 1; and after one of the K1 time-frequency resource blocks, at least one candidate RNTI is used to monitor first signaling, and the first signaling is used for scheduling a random access response.

In Embodiment 12, each of the K1 time-frequency resource blocks is configured for the preamble; the K1 time-frequency resource blocks are associated with Q1 RS resources, and the Q1 RS resources comprise at least one RS resource; the number of the at least one candidate RNTI used to monitor the first signaling is related to Q1; and Q1 is a positive integer not greater than K1.

As one embodiment, the phase of "the number of the at least one candidate RNTI used to monitor the first signaling being related to Q1" comprises: the number of the at least one candidate RNTI used to monitor the first signaling is equal to 1 and Q1 is equal to 1, or the number of the at least one candidate RNTI used to monitor the first signaling is greater than 1 and Q1 is greater than 1.

As one embodiment, the phase of "the number of the at least one candidate RNTI used to monitor the first signaling being related to Q1" comprises: the number of the at least one candidate RNTI used to monitor the first signaling is equal to Q1.

As one embodiment, the at least one candidate RNTI used to monitor the first signaling comprises at least the first candidate RNTI and the second candidate RNTI; a first time-frequency resource block group is used for determining the first candidate RNTI, the first time-frequency resource block group comprises at least one of the K1 time-frequency resource blocks, and the first time-frequency resource block group is associated with a first RS resource; a second time-frequency resource block group is used for determining the second candidate RNTI, the second time-frequency resource block group comprises at least one of the K1 time-frequency resource blocks, and the second time-frequency resource block group is associated with a second RS resource; the first RS resource and the second RS resource are respectively one of the Q1 RS resources; and the Q1 is greater than 1.

As one embodiment, the first processor 1201 starts a first time sub-window along with the preamble sent in one time-frequency resource block in the first time-frequency resource block group; starting a second time sub-window along with a preamble sent in one time-frequency resource block in the second time-frequency resource block group, wherein the first time sub-window is used for using the first candidate RNTI to monitor the first signaling; and the second time sub-window is used for using the second candidate RNTI to monitor the first signaling.

As one embodiment, at least the first time sub-window expiring and the second time sub-window expiring are used for triggering a first action set, and the first action set comprises at least considering that reception of a random access response is unsuccessful.

As one embodiment, the first processor 1201 starts a first time window along with the preamble sent in one of the K1 time-frequency resource blocks; and wherein the first time window expiring is used for triggering a first action set, and the first action set comprises at least considering that reception of a random access response is unsuccessful.

As one embodiment, the first processor 1201 receives a first RRC message, and the first RRC message is used for determining that the K1 time-frequency resource blocks are associated with Q1 RS resources.

As one embodiment, the first processor 1201 comprises the antenna 452, the receiving device 454, the multi-antenna receiving processor 458, the receiving processor 456, the controller/processor 459, the memory 460 and the data source 467 in FIG. 4 of the present application.

As one embodiment, the first processor 1201 comprises the antenna 452, the receiving device 454, the multi-antenna receiving processor 458, and the receiving processor 456 in FIG. 4 of the present application.

As one embodiment, the first processor 1201 comprises the antenna 452, the receiving device 454, and the receiving processor 456 in FIG. 4 of the present application.

As one embodiment, the first processor 1201 comprises the antenna 452, the transmitting device 454, the multi-antenna transmitting processor 457, the transmitting processor 468, the controller/processor 459, the memory 460 and the data source 467 in FIG. 4 of the present application.

As one embodiment, the first processor 1201 comprises the antenna 452, the transmitting device 454, the multi-antenna transmitting processor 457, and the transmitting processor 468 in FIG. 4 of the present application.

As one embodiment, the first processor 1201 comprises the antenna 452, the transmitting device 454, and the transmitting processor 468 in FIG. 4 of the present application.

### Embodiment 13

Embodiment 13 illustrates a structural block diagram of a processing device used in a second node according to one embodiment of the present application, as shown in FIG. 13. In FIG. 13, the processing device 1300 in the second node comprises a second transmitter 1301 and a second receiver 1302.

The second receiver 1302 receives a preamble sent in K1 time-frequency resource blocks, and K1 is an integer greater than 1; and
the second transmitter 1301 sends first signaling, and the first signaling is used for scheduling a random access response.

In Embodiment 13, after one of the K1 time-frequency resource blocks, the first signaling is monitored by using at least one candidate RNTI; each of the K1 time-frequency resource blocks is configured for the preamble; the K1 time-frequency resource blocks are associated with Q1 RS resources, and the Q1 RS resources comprise at least one RS resource; the number of the at least one candidate RNTI used to monitor the first signaling is related to Q1; and Q1 is a positive integer not greater than K1.

As one embodiment, the phase of "the number of the at least one candidate RNTI used to monitor the first signaling being related to Q1" comprises: the number of the at least one candidate RNTI used to monitor the first signaling is equal to 1 and Q1 is equal to 1, or the number of the at least one candidate RNTI used to monitor the first signaling is greater than 1 and Q1 is greater than 1.

As one embodiment, the phase of "the number of the at least one candidate RNTI used to monitor the first signaling being related to Q1" comprises: the number of the at least one candidate RNTI used to monitor the first signaling is equal to Q1.

As one embodiment, the at least one candidate RNTI used to monitor the first signaling comprises at least the first candidate RNTI and the second candidate RNTI; a first time-frequency resource block group is used for determining the first candidate RNTI, the first time-frequency resource block group comprises at least one of the K1 time-frequency resource blocks, and the first time-frequency resource block group is associated with a first RS resource; a second time-frequency resource block group is used for determining the second candidate RNTI, the second time-frequency resource block group comprises at least one of the K1 time-frequency resource blocks, and the second time-frequency resource block group is associated with a second RS resource; the first RS resource and the second RS resource are respectively one of the Q1 RS resources; and the Q1 is greater than 1.

As one embodiment, a first time sub-window is started along with the preamble sent in one of the time-frequency resource blocks in the first time-frequency resource block group; a second time sub-window is started along with a preamble sent in one time-frequency resource block in the second time-frequency resource block group; the first time sub-window is used for using the first candidate RNTI to monitor the first signaling; and the second time sub-window is used for using the second candidate RNTI to monitor the first signaling.

As one embodiment, at least the first time sub-window expiring and the second time sub-window expiring are used for triggering a first action set, and the first action set comprises at least considering that reception of a random access response is unsuccessful.

As one embodiment, a first time window is started along with the preamble sent in one of the K1 time-frequency resource blocks; and the first time window expiring is used for triggering a first action set, and the first action set comprises at least considering that receiving of a random access response is unsuccessful.

As one embodiment, the second transmitter 1301 sends a first RRC message, and the first RRC message is used for determining that the K1 time-frequency resource blocks are associated with the Q1 RS resources.

As one embodiment, the second transmitter 1301 comprises the antenna 420, the transmitting device 418, the multi-antenna transmitting processor 471, the transmitting processor 416, the controller/processor 475, and the memory 476 in FIG. 4 of the present application.

As one embodiment, the second transmitter 1301 comprises the antenna 420, the transmitting device 418, the multi-antenna transmitting processor 471, and the transmitting processor 416 in FIG. 4 of the present application.

As one embodiment, the second transmitter 1301 comprises the antenna 420, the transmitting device 418, and the transmitting processor 416 in FIG. 4 of the present application.

As one embodiment, the second receiver 1302 comprises the antenna 420, the receiver 418, the multi-antenna receiving processor 472, the receiving processor 470, the controller/processor 475, and the memory 476 in FIG. 4 of the present application.

As one embodiment, the second receiver 1302 comprises the antenna 420, the receiving device 418, the multi-antenna receiving processor 472, and the receiving processor 470 in FIG. 4 of the present application.

As one embodiment, the second receiver 1302 comprises the antenna 420, the receiving device 418, and the receiving processor 470 in FIG. 4 of the present application.

### Embodiment 14

Embodiment 14 illustrates a schematic diagram of a first time sub-window and a second time sub-window according to one embodiment of the present application, as shown in FIG. 14. In FIG. 14, the horizontal axis represents time and the vertical axis represents frequency; the block filled with diagonal lines represent three time-frequency resource blocks belonging to a first time-frequency resource block group; the block filled with crosses represent two time-frequency resource blocks belonging to a second time-frequency resource block group; block 1401: a reference time-frequency resource block in the first time-frequency resource block group; and block 1402: a reference time-frequency resource block in the second time-frequency resource block group.

As one embodiment, the first time sub-window is started along with a preamble sent in the reference time-frequency resource block in the first time-frequency resource block group; and the second time sub-window is started along with the preamble sent in the reference time-frequency resource block in the second time-frequency resource block group.

As one embodiment, this example does not limit the number of time-frequency resource blocks included in each time-frequency resource block group.

As one embodiment, this example does not limit whether the number of time-frequency resource blocks included in any two time-frequency resource block groups is the same.

As one embodiment, this example does not limit whether the two time-frequency resource blocks in each time-frequency resource block group overlap.

As one embodiment, this example does not limit whether the two time-frequency resource blocks in each time-frequency resource block group overlap.

As one embodiment, this example does not limit the time length of each time sub-window.

As one embodiment, this example does not limit whether there is a time interval between a start moment of each time sub-window and a cut-off moment of the reference time-frequency resource block.

As one embodiment, this example does not limit whether the two time sub-windows overlap in the time domain.

As one embodiment, this example does not limit the reference time-frequency resource block in each time-frequency resource block group to be the earliest time-frequency resource block in each time-frequency resource block group in the time domain.

### Embodiment 15

Embodiment 15 illustrates a schematic diagram of a first time window according to one embodiment of the present application, as shown in FIG. 15. In FIG. 15, the horizontal axis represents time and the vertical axis represents frequency; the block filled with diagonal lines represent three time-frequency resource blocks belonging to a first time-frequency resource block group; the block filled with crosses represent two time-frequency resource blocks belonging to a second time-frequency resource block group; block 1501: a reference time-frequency resource block in the first time-frequency resource block group; and block 1502: a reference time-frequency resource block in the second time-frequency resource block group.

As one embodiment, the first time window is started or restarted along with a preamble sent in the reference time-frequency resource block in the first time-frequency resource block group; and the first time window is restarted along with the preamble sent in the reference time-frequency resource block in the second time-frequency resource block group.

As one embodiment, this example does not limit the number of time-frequency resource blocks included in each time-frequency resource block group.

As one embodiment, this example does not limit whether the number of time-frequency resource blocks included in any two time-frequency resource block groups is the same.

As one embodiment, this example does not limit whether the two time-frequency resource blocks in each time-frequency resource block group overlap.

As one embodiment, this example does not limit whether the two time-frequency resource blocks in each time-frequency resource block group overlap.

As one embodiment, this example does not limit the time length of each time sub-window.

As one embodiment, this example does not limit whether there is a time interval between a start moment of each time sub-window and a cut-off moment of the reference time-frequency resource block.

As one embodiment, this example does not limit whether the two time sub-windows overlap in the time domain.

As one embodiment, this example does not limit the reference time-frequency resource block in each time-frequency resource block group to be the earliest time-frequency resource block in each time-frequency resource block group in the time domain.

### Embodiment 16

Embodiment 16 illustrates a schematic diagram of a first time window according to another embodiment of the present application, as shown in FIG. 16. In FIG. 16, the horizontal axis represents time and the vertical axis represents frequency; the block filled with diagonal lines represent three time-frequency resource blocks belonging to a first time-frequency resource block group; the block filled with crosses represent two time-frequency resource blocks belonging to a second time-frequency resource block group; block 1601: a reference time-frequency resource block in the first time-frequency resource block group; and block 1602: a reference time-frequency resource block in the second time-frequency resource block group.

As one embodiment, the first time window is started along with a preamble sent in the reference time-frequency resource block in the first time-frequency resource block group.

As one embodiment, the preamble sent in the reference time-frequency resource block in the second time-frequency resource block group does not change the running state of the first time window.

As one embodiment, this example does not limit the number of time-frequency resource blocks included in each time-frequency resource block group.

As one embodiment, this example does not limit whether the number of time-frequency resource blocks included in any two time-frequency resource block groups is the same.

As one embodiment, this example does not limit whether the two time-frequency resource blocks in each time-frequency resource block group overlap.

As one embodiment, this example does not limit whether the two time-frequency resource blocks in each time-frequency resource block group overlap.

As one embodiment, this example does not limit the time length of each time sub-window.

As one embodiment, this example does not limit whether there is a time interval between a start moment of each time sub-window and a cut-off moment of the reference time-frequency resource block.

As one embodiment, this example does not limit whether the two time sub-windows overlap in the time domain.

As one embodiment, this example does not limit the reference time-frequency resource block in each time-frequency resource block group to be the earliest time-frequency resource block in each time-frequency resource block group in the time domain.

Those skilled in the art can understand that all or parts of the steps in the above-mentioned method can be completed by instructing the relevant hardware by a program, and the program can be stored in a computer-readable storage medium, such as a read-only memory, a hard disk or an optical disk. Optionally, all or parts of the steps in the above-mentioned embodiments can also be implemented by using one or more integrated circuits. Correspondingly, each module unit in the above-mentioned embodiments can be implemented in the form of hardware or in the form of a software function module. The present application is not limited to any specific form of combinations of software and hardware. The user equipment, the terminal and the UE in the present application include but are not limited to a drone, a communication module on the drone, a remote-controlled airplane, an aircraft, a small airplane, a mobile phone, a tablet computer, a notebook, a vehicle-mounted communication device, a wireless sensor, an Internet card, an Internet of Things terminal, an RFID terminal, an NB-IOT terminal, an MTC (Machine Type Communication) terminal, an eMTC (enhanced MTC) terminal, a data card, an Internet card, a vehicle-mounted communication device, a low-cost mobile phone, a low-cost tablet computer and other wireless communication devices. The base stations or the system devices in the present application include but are not limited to a macrocell base station, a microcell base station, a Femtocell, a relay base station, a gNB (NR node B) NR node B, a TRP (Transmitter Receiver Point) and other wireless communication devices.

The above is only a preferred embodiment of the present application and is not intended to limit the scope of protection of the present application. Any modifications, equivalent replacements, improvements, etc. made within the spirit and principles of the present application shall be included in the protection scope of the present application.

## Claims

1. A first node used for wireless communication, comprising:
a first processor for sending a preamble in K1 time-frequency resource blocks, K1 being an integer greater than 1; and after one of the K1 time-frequency resource blocks, using at least one candidate RNTI to monitor first signaling, the first signaling being used for scheduling a random access response,
wherein each of the K1 time-frequency resource blocks is configured for the preamble; the K1 time-frequency resource blocks are associated with Q1 RS resources, and the Q1 RS resources comprise at least one RS resource; the number of the at least one candidate RNTI used to monitor the first signaling is related to Q1; and Q1 is a positive integer not greater than K1.

2. The first node according to claim 1, wherein a phrase that the number of the at least one candidate RNTI used to monitor the first signaling is related to Q1 comprises: the number of the at least one candidate RNTI used to monitor the first signaling is equal to 1 and the Q1 is equal to 1, or the number of the at least one candidate RNTI used to monitor the first signaling is greater than 1 and the Q1 is greater than 1.

3. The first node according to claim 1 or 2, wherein the phrase that the number of the at least one candidate RNTI used to monitor the first signaling is related to Q1 comprises: the number of the at least one candidate RNTI used to monitor the first signaling is equal to the Q1.

4. The first node according to any one of claims 1 to 3, wherein the at least one candidate RNTI used to monitor the first signaling comprises at least a first candidate RNTI and a second candidate RNTI; a first time-frequency resource block group is used for determining the first candidate RNTI, the first time-frequency resource block group comprises at least one of the K1 time-frequency resource blocks, and the first time-frequency resource block group is associated with a first RS resource; a second time-frequency resource block group is used for determining the second candidate RNTI, the second time-frequency resource block group comprises at least one of the K1 time-frequency resource blocks, and the second time-frequency resource block group is associated with a second RS resource; the first RS resource and the second RS resource are respectively one of the Q1 RS resources; and the Q1 is greater than 1.

5. The first node according to claim 4, comprising:
the first processor for starting a first time sub-window along with a preamble sent in one time-frequency resource block in the first time-frequency resource block group, and starting a second time sub-window along with a preamble sent in one time-frequency resource block in the second time-frequency resource block group,
wherein the first time sub-window is used for using the first candidate RNTI to monitor the first signaling; and the second time sub-window is used for using the second candidate RNTI to monitor the first signaling.

6. The first node according to claim 5, wherein at least the first time sub-window expiring and the second time sub-window expiring are used for triggering a first action set, and the first action set comprises at least considering that reception of a random access response is unsuccessful.

7. The first node according to any one of claims 1 to 5, comprising:
the first processor for starting a first time window along with a preamble sent in one of the K1 time-frequency resource blocks,
wherein the first time window expiring is used for triggering a first action set, and the first action set comprises at least considering that reception of a random access response is unsuccessful.

8. A second node used for wireless communication, comprising:
a second receiver for receiving a preamble sent in K1 time-frequency resource blocks, K1 being an integer greater than 1; and
a second transmitter for sending first signaling, the first signaling being used for scheduling a random access response,
wherein after one of the K1 time-frequency resource blocks, the first signaling is monitored by using at least one candidate RNTI; each of the K1 time-frequency resource blocks is configured for the preamble; the K1 time-frequency resource blocks are associated with Q1 RS resources, and the Q1 RS resources comprise at least one RS resource; the number of the at least one candidate RNTI used to monitor the first signaling is related to Q1; and Q1 is a positive integer not greater than K1.

9. A method for a first node used for wireless communication, comprising:
sending a preamble in K1 time-frequency resource blocks, K1 being an integer greater than 1; after one of the K1 time-frequency resource blocks, using at least one candidate RNTI to monitor first signaling, the first signaling being used for scheduling a random access response,
wherein each of the K1 time-frequency resource blocks is configured for the preamble; the K1 time-frequency resource blocks are associated with Q1 RS resources, and the Q1 RS resources comprise at least one RS resource; the number of the at least one candidate RNTI used to monitor the first signaling is related to Q1; and Q1 is a positive integer not greater than K1.

10. A method for a second node used for wireless communication, comprising:
receiving a preamble sent in K1 time-frequency resource blocks, K1 being an integer greater than 1; and
sending first signaling, the first signaling being used for scheduling a random access response,
wherein after one of the K1 time-frequency resource blocks, the first signaling is monitored by using at least one candidate RNTI; each of the K1 time-frequency resource blocks is configured for the preamble; the K1 time-frequency resource blocks are associated with Q1 RS resources, and the Q1 RS resources comprise at least one RS resource; the number of the at least one candidate RNTI used to monitor the first signaling is related to Q1; and Q1 is a positive integer not greater than K1.
